(19)

Europäisches Patentamt
European Patent Office
Office européen des brevets

(11)  **EP 4 152 669 A1**

(12)  **EUROPEAN PATENT APPLICATION**
published in accordance with Art. 153(4) EPC

(43) Date of publication:
**22.03.2023   Bulletin 2023/12**

(21) Application number: **21804546.6**

(22) Date of filing: **13.05.2021**

(51) International Patent Classification (IPC):
*H04L 5/00* (2006.01)       *H04L 1/00* (2006.01)
*H04L 1/18* (2006.01)       *H04L 27/26* (2006.01)
*H04B 7/0408* (2017.01)     *H04W 72/12* (2009.01)

(52) Cooperative Patent Classification (CPC):
**H04B 7/0408; H04L 1/00; H04L 1/18; H04L 5/00;
H04L 27/26; H04W 72/12**

(86) International application number:
**PCT/KR2021/006003**

(87) International publication number:
**WO 2021/230676 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.05.2020   KR 20200057077
14.01.2021   KR 20210005617**

(71) Applicant: **LG Electronics, Inc.**
**Yeongdeungpo-gu**
**Seoul 07336 (KR)**

(72) Inventors:
• **KIM, Seonwook**
  **Seoul 06772 (KR)**
• **YANG, Suckchel**
  **Seoul 06772 (KR)**
• **KIM, Kijun**
  **Seoul 06772 (KR)**
• **KANG, Jiwon**
  **Seoul 06772 (KR)**

(74) Representative: **Maikowski & Ninnemann
Patentanwälte Partnerschaft mbB
Postfach 15 09 20
10671 Berlin (DE)**

(54)  **METHOD AND APPARATUS FOR TRANSMITTING AND RECEIVING WIRELESS SIGNAL IN WIRELESS COMMUNICATION SYSTEM**

(57)    The present disclosure relates to a method and an apparatus therefor, the method comprising the steps of: transmitting a first uplink signal by applying a first beam; performing a beam switching operation for switching the first beam to a second beam; and transmitting a second uplink signal by applying the second beam, wherein, on the basis of an interval between the first uplink signal and the second uplink signal being smaller than a duration of a preconfigured number of symbol, the last part of the first uplink signal or the first part of the second uplink signal is excluded from the transmission of the first uplink signal and the second uplink signal.

FIG. 9

Start

Transmitting a first uplink signal by applying a first beam — S900

Performing a beam switching operation
for switching the first beam to a second beam — S910

Transmitting a second uplink signal by the second beam,
based on an interval between the first uplink signal and the second uplink signal
being smaller than a duration of a preconfigured number of symbols,
last part of the first uplink signal or first part of the second uplink signal is
excluded from transmissions of the first uplink signal and the second uplink signal — S920

End

**Description**

**TECHNICAL FIELD**

The present disclosure relates to a wireless communication system, and more particularly, to a method and apparatus for transmitting and receiving a wireless signal.

**BACKGROUND ART**

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

Provided are a method and apparatus for efficiently performing a wireless signal transmission and reception process.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

According to a first aspect of the present disclosure, there is provided a method of transmitting an uplink signal by a user equipment (UE) in a wireless communication system. The method may include: transmitting a first uplink signal by applying a first beam; performing a beam switching operation for switching the first beam to a second beam; and transmitting a second uplink signal by applying the second beam. Based on an interval between the first uplink signal and the second uplink signal being smaller than a duration of a predetermined number of symbols, last several symbols of the first uplink signal or first several symbols of the second uplink signal may be excluded from transmission of the first uplink signal and the second uplink signal.

According to a second aspect of the present disclosure, there is provided a UE configured to operate in a wireless communication system. The UE may include: at least one radio frequency (RF) unit; at least one processor; and at least one computer memory operably coupled to the at least one processor and configured to, when executed, cause the at least one processor to perform operations. The operations may include: transmitting a first uplink signal by applying a first beam; performing a beam switching operation for switching the first beam to a second beam; and transmitting a second uplink signal by applying the second beam. Based on an interval between the first uplink signal and the second uplink signal being smaller than a duration of a predetermined number of symbols, last several symbols of the first uplink signal or first several symbols of the second uplink signal may be excluded from transmission of the first uplink signal and the second uplink signal.

According to a third aspect of the present disclosure, there is provided an apparatus for a UE. The apparatus may include: at least one processor; and at least one computer memory operably coupled to the at least one processor and configured to, when executed, cause the at least one processor to perform operations. The operations may include transmitting a first uplink signal by applying a first beam.

The operations may include: performing a beam switching operation for switching the first beam to a second beam; and transmitting a second uplink signal by applying the second beam. Based on an interval between the first uplink signal and the second uplink signal being smaller than a duration of a predetermined number of symbols, last several symbols of the first uplink signal or first several symbols of the second uplink signal may be excluded from transmission of the first uplink signal and the second uplink signal.

According to a fourth aspect of the present disclosure, there is provided a computer-readable storage medium including at least one computer program configured to, when executed, cause at least one processor to perform operations. The operations may include: transmitting a first uplink signal by applying a first beam; performing a beam switching operation for switching the first beam to a second beam; and transmitting a second uplink signal by applying the second beam. Based on an interval between the first uplink signal and the second uplink signal being smaller than a duration of a predetermined number of symbols, last several symbols of the first uplink signal or first several symbols of the second uplink signal may be excluded from transmission of the first uplink signal and the second uplink signal.

According to a fifth aspect of the present disclosure, there is provided a method of receiving an uplink signal by a base station in a wireless communication system. The method may include: receiving a first uplink signal by applying a first beam; performing a beam switching operation for switching the first beam to a second beam; and receiving a second uplink signal by applying the second beam. Based on an interval between the first uplink signal and the second uplink signal being smaller than a duration of a predetermined number of symbols, last several symbols of the first uplink signal or first several symbols of the second uplink signal may be excluded from receiving the first uplink signal and the second uplink signal.

According to a sixth aspect of the present disclosure, there is provided a base station configured to operate in a wireless communication system. The base station may include: at least one RF unit; at least one processor; and at least one computer memory operably coupled to the at least one processor and configured to, when executed, cause the at least one processor to perform operations. The operations may include: receiving a first uplink signal by applying a first beam; performing a beam switching operation for switching the first beam to a second beam; and receiving a second uplink signal by applying the second beam. Based on an interval between the first uplink signal and the second uplink signal being smaller than a duration of a predetermined number of symbols, last several symbols of the first uplink signal or first several symbols of the second uplink signal may be excluded from receiving the first uplink signal and the second uplink signal.

According to an embodiment, the last several symbols of the first uplink signal or the first several symbols of the second uplink signal may be rate-matched or punctured.

According to an embodiment, a time duration corresponding to the last several symbols of the first uplink signal or a time duration corresponding to the first several symbols of the second uplink signal may be used as a beam switching time for the beam switching operation.

According to an embodiment, based on a priority of the first uplink signal being higher than a priority of the second uplink signal, a time duration corresponding to a first part of the second uplink signal may be used as the beam switching time. Based on the priority of the second uplink signal being higher than the priority of the first uplink signal, a time duration corresponding to a last part of the first uplink signal may be used as the beam switching time.

According to an embodiment, when the priorities of the first and second uplink signals are determined based on types of the first and second uplink signals, and when the types of the first and second uplink signals are same, a priority of a signal scheduled by downlink control information (DCI) may be determined to be higher than a priority of a signal configured by higher layer signaling.

According to an embodiment, the types of the first and second uplink signals may include at least one of a physical random access channel (PRACH), a physical uplink shared channel (PUSCH), a physical uplink control channel (PUCCH), or a sounding reference signal (SRS), and priorities may be determined in the following order: the PRACH, the PUCCH, the PUSCH, and the SRS.

According to an embodiment, 1) a beam switching time for the beam switching operation may be longer than a cyclic prefix (CP) length of the first and second uplink signals or the duration of the predetermined number of symbols; 2) a beam switching time reported by signaling of capability of the UE may be longer than the CP length of the first and second uplink signals or the duration of the predetermined number of symbols; or 3) the beam switching time may be shorter than the CP length or the duration of the predetermined number of symbols, and a difference between the beam switching time and the CP length or the duration of the predetermined number of symbols may be smaller than or equal to a threshold.

According to an embodiment, the first uplink signal and the second uplink signal may include at least one of a PRACH, a PUSCH, a PUCCH, or an SRS.

## ADVANTAGEOUS EFFECTS

According to the present disclosure, a wireless signal may be efficiently transmitted and received in a wireless communication system.

According to the present disclosure, even if a cyclic prefix (CP) length becomes shorter than a beam switching time due to the use of a relatively large subcarrier spacing (SCS), it is possible to prevent degradation of signal transmission/reception performance.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## DESCRIPTION OF DRAWINGS

The accompanying drawings, which are included to provide a further understanding of the disclosure, illustrate embodiments of the present disclosure and together with the description serve to explain the principle of the present disclosure.

FIG. 1 illustrates physical channels and a general signal transmission method using the physical channels in a 3rd generation partnership project (3GPP) system as an exemplary wireless communication system.
FIG. 2 illustrates a radio frame structure.
FIG. 3 illustrates a resource grid of a slot.
FIG. 4 illustrates mapping of physical channels in a slot.
FIG. 5 illustrates an exemplary structure of one REG.
FIG. 6 illustrates an exemplary uplink (UL) beam management (BM) procedure based on sounding reference signals (SRSs).
FIG. 7 is a flowchart illustrating an exemplary LTL BM procedure based on SRSs.
FIG. 8 illustrates an example of applying a beam switching time according to proposed methods.
FIGS. 9 to 12 are flowcharts of a user equipment (LTE) and a base station (BS) according to the proposed methods.
FIGS. 13 to 16 illustrate a communication system 1 and wireless devices, which are applied to the present disclosure.

## BEST MODE

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

As more and more communication devices require larger communication capacities, the need for enhanced mobile broadband communication relative to the legacy radio access technologies (RATs) has emerged. Massive machine type communication (MTC) providing various services to inter-connected multiple devices and things at any time in any place is one of significant issues to be addressed for next-generation communication. A communication system design in which services sensitive to reliability and latency are considered is under discussion as well. As such, the introduction of the next-generation radio access technology (RAT) for enhanced mobile broadband communication (eMBB), massive MTC (mMTC), and ultra-reliable and low latency communication (URLLC) is being discussed. For convenience, this technology is called NR or New RAT in the present disclosure.

While the following description is given in the context of a 3GPP communication system (e.g., NR) for clarity, the technical spirit of the present disclosure is not limited to the 3GPP communication system.

In a wireless access system, a user equipment (UE) receives information from a base station (BS) on DL and transmits information to the BS on UL. The information transmitted and received between the LTE and the BS includes general data and various types of control information. There are many physical channels according to the types/usages of information transmitted and received between the BS and the UE.

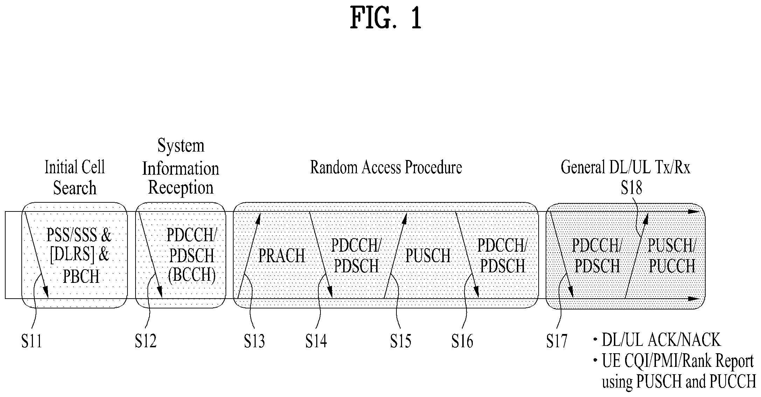

FIG. 1 illustrates physical channels and a general signal transmission method using the physical channels in a 3GPP system.

When a UE is powered on or enters a new cell, the UE performs initial cell search (S101). The initial cell search involves acquisition of synchronization to a BS. For this purpose, the UE receives a synchronization signal block (SSB) from the BS. The SSB includes a primary synchronization signal (PSS), a secondary synchronization signal (SSS), and a physical broadcast channel (PBCH). The UE synchronizes its timing to the BS and acquires information such as a cell identifier (ID) based on the PSS/SSS. Further, the UE may acquire information broadcast in the cell by receiving the PBCH from the BS. During the initial cell search, the UE may also monitor a DL channel state by receiving a downlink reference signal (DL RS).

Subsequently, to complete connection to the BS, the LTE may perform a random access procedure with the BS (S103 to S106). Specifically, the UE may transmit a preamble on a physical random access channel (PRACH) (S103) and may receive a PDCCH and a random access response (RAR) for the preamble on a PDSCH corresponding to the PDCCH (S104). The UE may then transmit a physical uplink shared channel (PUSCH) by using scheduling information in the RAR (S105), and perform a contention resolution procedure including reception of a PDCCH and a PDSCH signal corresponding to the PDCCH (S106).

After the above procedure, the UE may receive a PDCCH and/or a PDSCH from the BS (S107) and transmit a physical uplink shared channel (PUSCH) and/or a physical uplink control channel (PUCCH) to the BS (S108), in a general LTL/DL signal transmission procedure. Control information that the UE transmits to the BS is generically called uplink control information (UCI). The UCI includes a hybrid automatic repeat and request acknowledgement/negative acknowledgement (HARQ-ACK/NACK), a scheduling request (SR), channel state information (CSI), and so on. The CSI includes a channel quality indicator (CQI), a precoding matrix index (PMI), a rank indication (RI), and so on. In general, UCI is transmitted on a PUCCH. However, if control information and data should be transmitted simultaneously, the control information and the data may be transmitted on a PUSCH. In addition, the UE may transmit the UCI aperiodically on the PUSCH, upon receipt of a request/command from a network.

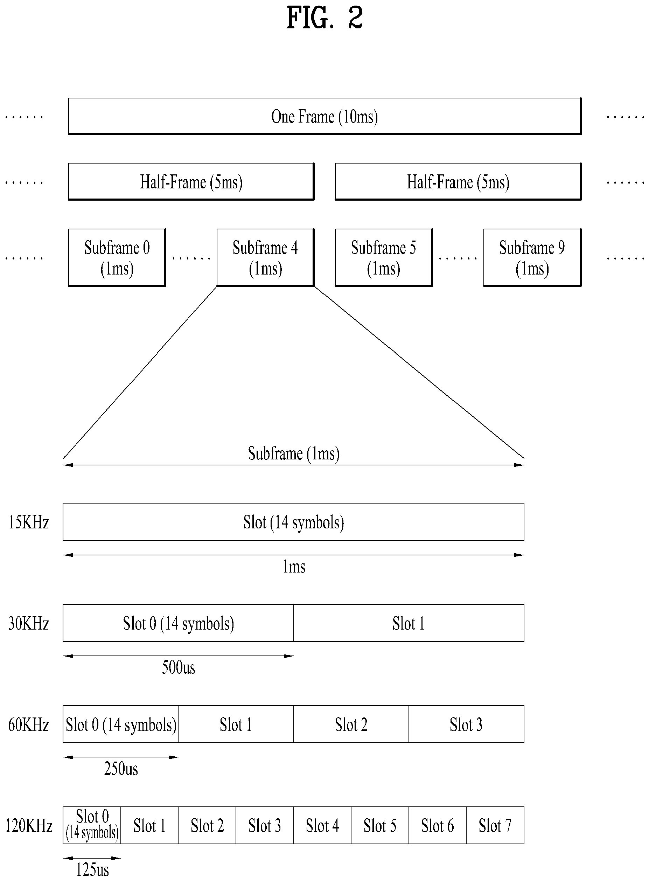

FIG. 2 illustrates a radio frame structure.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{Frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot  * $N^{frame,u}_{slot}$: number of slots in a frame  * $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{Frame,u}_{slot}$ | $N^{subframe,u}_{slot}$ |
|---|---|---|---|
| 60KHz (u=2) | 12 | 40 | 4 |

The frame structure is merely an example, and the number of subframes, the number of slots, and the number of symbols in a frame may be changed in various manners.

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells. A symbol may include an OFDM symbol (or a CP-OFDM symbol) and an SC-FDMA symbol (or a discrete Fourier transform-spread-OFDM (DFT-s-OFDM) symbol).

NR may support various numerologies (or subcarrier spacings (SCSs)) to provide various 5G services. For example, NR may support a wide area in conventional cellular bands in an SCS of 15 kHz and support a dense urban area and a wide carrier bandwidth with lower latency in an SCS of 30/60 kHz. In an SCS of 60 kHz or above, NR may support a bandwidth higher than 24.25 GHz to overcome phase noise. NR frequency bands may be divided into two frequency ranges: frequency range 1 (FR1) and frequency range 2 (FR2). FR1 and FR2 may be configured as shown in Table 3 below. FR 2 may mean a millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

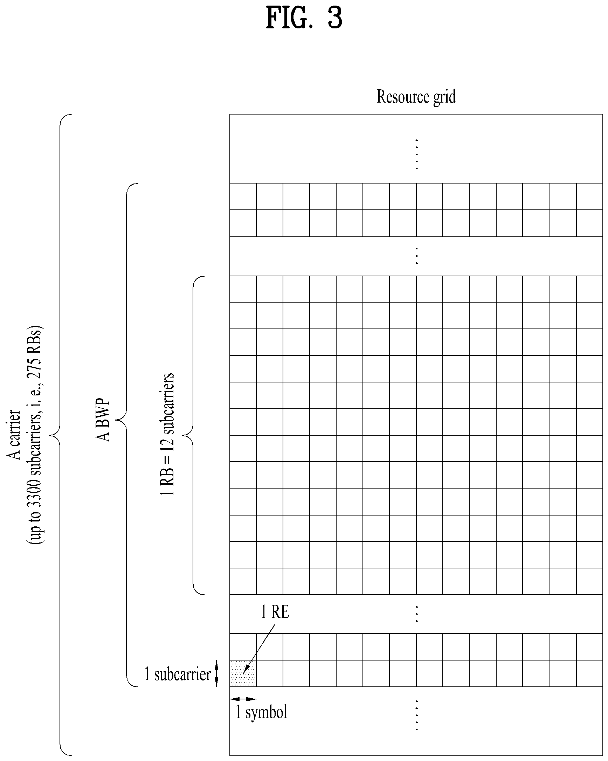

FIG. 3 illustrates a resource grid during the duration of one slot. A slot includes a plurality of symbols in the time domain. For example, one slot includes 14 symbols in a normal CP case and 12 symbols in an extended CP case.

A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

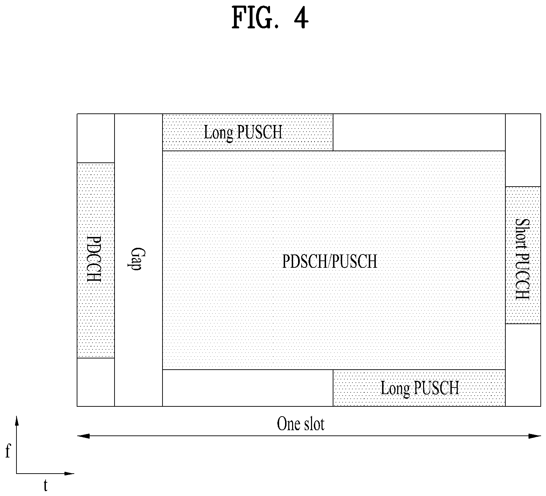

FIG. 4 illustrates a structure of a slot. In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel (e.g., PDCCH), and the last M symbols (hereinafter, LTL control region) in the slot may be used to transmit a LTL control channel (e.g., PUCCH). N and M are integers greater than or equal to 0. A resource region (hereinafter, a data region) that is between the DL control region and the LTL control region may be used for DL data (e.g., PDSCH) transmission or UL data (e.g., PUSCH) transmission. The GP provides a time gap for the BS and LTE to transition from the transmission mode to the reception mode or from the reception mode to the transmission mode. Some symbols at the time of DL-to-UL switching in a subframe may be configured as the GP.

A BS transmits related signals on later-described DL channels to a UE, and the UE receives the related signals on the DL channels from the BS.

(1) Physical Downlink Shared Channel (PDSCH)

The PDSCH delivers DL data (e.g., a DL-shared channel transport block (DL-SCH TB)) and adopts a modulation scheme such as quadrature phase shift keying (QPSK), 16-ary quadrature amplitude modulation (16QAM), 64-ary QAM (64QAM), or 256-ary QAM (256 QAM). A TB is encoded to a codeword. The PDSCH may deliver up to two codewords. The codewords are individually scrambled and modulated, and modulation symbols of each codeword are mapped to one or more layers. An OFDM signal is generated by mapping each layer together with a DMRS to resources, and transmitted through a corresponding antenna port.

The PDSCH has two different mapping types, referred to as type A and type B. The mapping types are specified based on PDSCH DMRS types.

PDSCH Mapping Type A

- The starting symbol of the PDSCH may be one of symbols #0 to #3 (i.e., the first to fourth symbols of the slot).
- The length of the PDSCH may be 3 to 14 symbols for the normal CP and 3 to 12 symbols for the extended CP.
- A DMRS symbol may start only at symbol #2 or #3 (i.e., the third or fourth symbol of the slot), regardless of the PDSCH starting symbol and the PDSCH length.

PDSCH Mapping Type B

- The starting symbol of the PDSCH may be symbols #0 to #12 for the normal CP and symbols #0 to #10 for the extended CP.
- The length of the PDSCH may be usually 2, 4, or 7 symbols for the normal CP and 2, 4, or 6 symbols for the extended CP.
- The location of a DMRS may be fixed to the first symbol of the allocated PDSCH.

(2) Physical Downlink Control Channel (PDCCH)

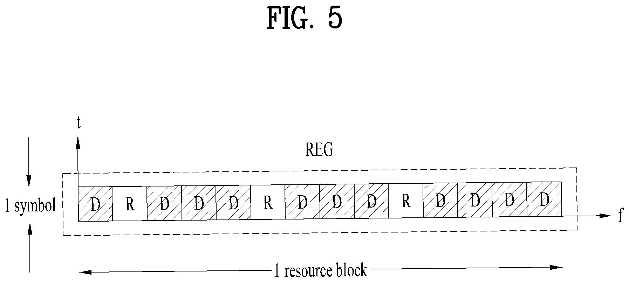

The PDCCH delivers DCI and adopts QPSK as a modulation scheme. One PDCCH includes 1, 2, 4, 8, or 16 control channel elements (CCEs) according to its aggregation level (AL). One CCE includes 6 resource element groups (REGs), each REG being defined by one OFDM symbol by one (physical) resource block ((P)RB)). FIG. 5 illustrates an exemplary structure of one REG.

In FIG. 5, D represents an RE to which DCI is mapped, and R represents an RE to which a DMRS is mapped. The DMRS is mapped to 1st, 5th, and 9th RE along the frequency direction in one symbol.

The PDCCH may be transmitted in a control resource set (CORESET). The CORESET is defined as a set of resource element groups (REGs) with a given numerology (e.g., SCS, CP length, and so on). A plurality of CORESETs for one UE may overlap with each other in the time/frequency domain. The CORESET may be configured by system information (e.g., master information block (MIB)) or by UE-specific higher layer signaling (e.g., radio resource control (RRC) signaling). Specifically, the number of RBs and the number of symbols (up to 3 symbols) included in the CORESET may be configured by higher layer signaling.

For each CORESET, a precoder granularity in the frequency domain is set to one of the followings by higher-layer signaling:

- *sameAsREG-bundle*: It equals to an REG bundle size in the frequency domain.
- *allContiguousRBs*: It equals to the number of contiguous RBs in the frequency domain within the CORESET.

The REGs of the CORESET are numbered in a time-first mapping manner. That is, the REGs are sequentially numbered in an increasing order, starting with 0 for the first OFDM symbol of the lowest-numbered RB in the CORESET.

The LTE may obtain DCI transmitted over a PDCCH by decoding (blind decoding) a set of PDCCH candidates. The set of PDCCH candidates decoded by the UE is defined as a PDCCH search space set. A search space set may be a common search space (CSS) or a UE-specific search space (USS). The UE may obtain DCI by monitoring PDCCH candidates in one or more search space sets configured by an MIB or higher layer signaling. Each CORESET configuration may be associated with one or more search space sets, and each search space set may be associated with one CORESET configuration. One search space set may be determined based on the following parameters.

- *controlResourceSetId*: A set of control resources related to the search space set
- *monitoringSlotPeriodicityAndOffset*: A PDCCH monitoring periodicity (in a unit of slot) and a PDCCH monitoring offset (in a unit of slot)
- *monitoringSymbolsWithinSlot*: A PDCCH monitoring pattern (e.g., first symbol(s) in the CORESET) in a PDCCH monitoring slot
- *nrofCandidates*: The number of PDCCH candidates (one of 0, 1, 2, 3, 4, 5, 6, and 8) for each AL = f 1, 2, 4, 8, 16}

Table 4 shows the characteristics of each search space type.

[Table 4]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

UL channel structures

The UE transmits related signals on later-described UL channels to the BS, and the BS receives the related signals on the UL channels from the UE.

Physical uplink shared channel (PUSCH)

The PUSCH delivers LTL data (e.g., a LTL-shared channel transport block (LTL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the LTE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

Physical uplink control channel (PUCCH)

The PUCCH delivers UCI, an HARQ-ACK, and/or an SR and is classified as a short PUCCH or a long PUCCH according to the transmission duration of the PUCCH. Table 5 lists exemplary PUCCH formats.

[Table 5]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the LTE transmits a positive SR, the LTE transmits the PUCCH of PUCCH format 0 in a PUCCH resource for a corresponding SR configuration.
PUCCH format 1 conveys UCI of up to 2 bits and modulation symbols of the UCI are spread with an OCC (which is configured differently whether frequency hopping is performed) in the time domain. The DMRS is transmitted in a symbol in which a modulation symbol is not transmitted (i.e., transmitted in time division multiplexing (TDM)).
PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 1-symbol PUCCH format 2, frequency hopping may be activated.
PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.
PUCCH format 4 supports multiplexing of up to 4 UEs in the same PRBS, and conveys UCI of more than 2 bits. In other words, PUCCH resources of PUCCH format 3 includes an OCC. Modulation symbols are transmitted in TDM with the DMRS.

**Beam Management (BM)**

**1) DL BM Related Beam Indication**

At least for the purposes of quasi co-location (QCL) indication, the UE may be configured with a list of up to M candidate transmission configuration indication (TCI) states through RRC signaling. For example, M may be 64.
Each TCI state may be configured with one RS set. The ID of each DL RS at least for the purpose of spatial QCL (QCL Type D) in the RS set may refer to one of the following DL RS types: SSB, periodic-CSI RS (P-CSI RS), semi persistent-CSI RS (SP-CSI RS), aperiodic-CSI RS (A-CSI RS), etc.
The ID of DL RS(s) in the RS set used at least for the purpose of spatial QCL may be initialized/updated by explicit signaling
Table 6 shows an exemplary *TCI-State* information element (IE). The *TCI-State* IE is associated with QCL type(s) corresponding to one or two DL RSs.

[Table 6]

In Table 6, the parameter *bwp-Id* indicates a DL BWP in which the RS is located, the parameter *cell* indicates a carrier in which the RS is located, and the parameter *referenceSignal* indicates reference antenna port(s) serving as a QCL source for corresponding target antenna port(s) or an RS including the reference antenna port(s). In this case, the target antenna port(s) may be a channel state information-reference signal (CSI-RS), a PDCCH DMRS, or a PDSCH DMRS. As an example, a TCI state ID may be indicated by non-zero power (NZP) CSI-RS resource configuration information in order to indicate QCL reference information for a NZP CSI-RS. As another example, a TCI state ID may be indicated by each CORESET configuration in order to indicate QCL reference information for PDCCH DMRS antenna port(s). As a further example, a TCI state ID may be indicated in DCI in order to indicate QCL reference information for the PDSCH DMRS antenna port(s).

**2) Quasi-Co Location (QCL)**

An antenna port may be defined such that a channel conveying a symbol on the antenna port is inferred from a channel conveying another symbol on the same antenna port. When the properties of a channel conveying a symbol on one antenna port are incapable of being inferred from a channel carrying a symbol on another antenna port, the two antenna ports may be said to be in the quasi co-located or quasi co-location (QC/QCL) relationship. The channel properties may include at least one of the following factors: delay spread, Doppler spread, frequency/Doppler shift, average received power, and received timing/average delay, or spatial receive (RX) parameter. Here, the spatial Rx parameter refers to a spatial (RX) channel property parameter such as angle of arrival.
To detect a PDCCH including DCI intended for the corresponding terminal and a given serving cell and decode a PDSCH according to the detected PDCCH, the UE may be configured with a list of up to M TCI-state configurations through a higher layer parameter *PDSCH-Config*, where M depends on LTE capability.
Each TCI-state includes parameters for establishing the QCL relationship between one or two DL RSs and DMRS ports of the PDSCH.

The QCL relationship may be configured by a higher layer parameter *qcl-Type1* for a first DL RS and a higher layer parameter *qcl-Type2* for a second DL RS (if configured). For the two DL RSs, the QCL types may not be the same, regardless of whether the reference is the same DL RS or different DL RSs.

The QCL type of each DL RS is given by a higher layer parameter *qcl-Type* in QCL-Info and have one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if the target antenna port is a specific NZP CSI-RS, corresponding NZP CSI-RS antenna ports may be indicated/configured to be QCL with a specific tracking reference signal (TRS) in terms of QCL-Type A and QCL with a specific SSB in terms of QCL-Type D. Upon receiving the above indication/configuration, the UE may receive the corresponding NZP CSI-RS based on Doppler and delay values measured on a TRS QCL in terms of QCL-Type A and apply a reception beam used to receive an SSB QCL in terms of QCL-Type D to the reception of the corresponding NZP CSI-RS.

The UE may receive an activation command used to map up to 8 TCI states to the code point of a DCI field '*Transmission Configuration Indication*' through medium access control (MAC) CE signaling.

### 3) Uplink Beam Management (UL BM)

Depending on the UE implementation, beam reciprocity (or beam correspondence) between a Tx beam and an Rx beam may or may not be established in the UL BM. If the reciprocity between the Tx beam and the Rx beam is established for both the BS and the UE, a UL beam pair may be aligned by a DL beam pair. However, if the reciprocity between the Tx beam and the Rx beam is not established for any one of the BS and the LTE, a process of determining a UL beam pair is required separately from determination of a DL beam pair.

In addition, if both the BS and the UE maintain beam correspondence, the BS may use the LTL BM procedure to determine a DL Tx beam without requesting the LTE to report a UE's preferred beam.

The LTL BM may be performed based on beamformed LTL SRS transmission. Whether the UL BM is applied to an SRS resource set may be configured by *usage* (which is a higher layer parameter). When *usage* is set to 'Beam-Management(BM)', only one SRS resource may be transmitted in each of a plurality of SRS resource sets at a given time instant.

The UE may receive one or more sounding reference symbol (SRS) resource sets configured by *SRS-ResourceSet* (which is a higher layer parameter) (through higher layer signaling such as RRC signaling). For each SRS resource set, the UE may be configured with K (K≧1) SRS resources (through a higher layer parameter *SRS-resource*). In this case, K is a natural number, and the maximum value of K is indicated by a parameter *SRS_capability.*

Similarly to the DL BM procedure, the LTL BM procedure may be divided into Tx beam sweeping of the UE and Rx beam sweeping of the BS.

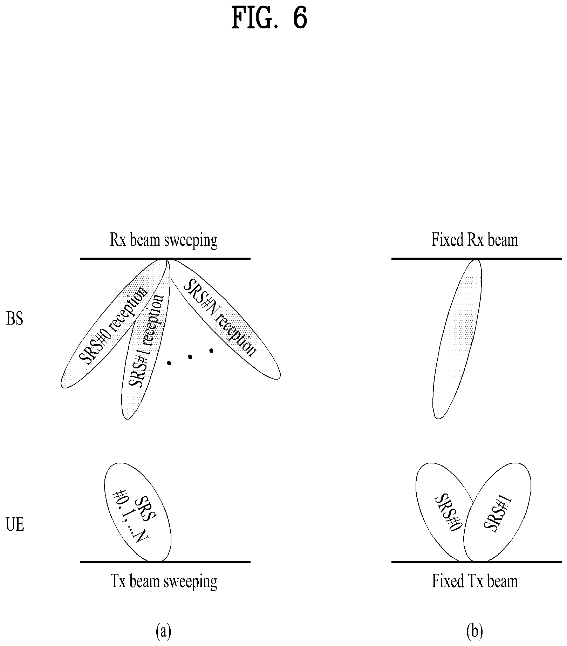

FIG. 6 illustrates an exemplary UL BM procedure based on SRSs. Specifically, FIG. 6(a) shows a process for a BS to determine an Rx beam, and FIG. 6(b) shows a process for a UE to sweep a Tx beam.

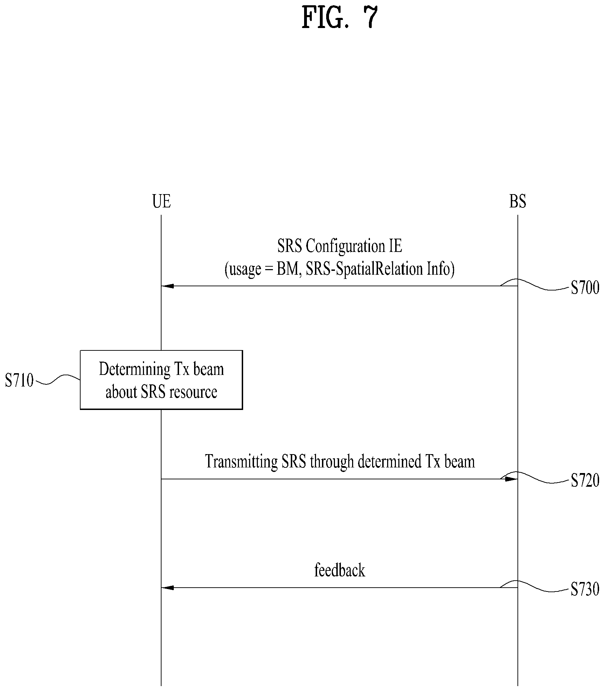

FIG. 7 is a flowchart illustrating an exemplary LTL BM procedure based on SRSs.

Referring to FIG. 7, the LTE may receive RRC signaling (e.g., *SRS-Config IE*) including a parameter usage set to 'beam management' from the BS (S700).

Table 7 shows an exemplary *SRS-Config* IE, and the *SRS-Config* IE is used to configure SRS transmission. The *SRS-Config* IE includes a list of *SRS-Resources* and a list of *SRS-ResourceSets*. Each SRS resource set means a set of *SRS-resources.*

The network may trigger transmission of an SRS resource set based on configured *aperiodicSRS-ResourceTrigger* (L1 DCI).

[Table 7]

```
-- ASN1START
-- TAG-MAC-CELL-GROUP-CONFIG-START

SRS-Config ::=                          SEQUENCE {
    srs-ResourceSetToReleaseList            SEQUENCE (SIZE(1..maxNrofSRS-ResourceSets)) OF
SRS-ResourceSetId           OPTIONAL,   -- Need N
    srs-ResourceSetToAddModList             SEQUENCE (SIZE(1..maxNrofSRS-ResourceSets)) OF SRS-
ResourceSet            OPTIONAL,   -- Need N

    srs-ResourceToReleaseList               SEQUENCE (SIZE(1..maxNrofSRS-Resources)) OF SRS-
ResourceId              OPTIONAL,   -- Need N
    srs-ResourceToAddModList                SEQUENCE (SIZE(1..maxNrofSRS-Resources)) OF SRS-
Resource               OPTIONAL,   -- Need N

    tpc-Accumulation                        ENUMERATED
{disabled}                                              OPTIONAL,    -- Need S
    ...
}

SRS-ResourceSet ::=                     SEQUENCE {
    srs-ResourceSetId                       SRS-ResourceSetId,
    srs-ResourceIdList                      SEQUENCE (SIZE(1..maxNrofSRS-ResourcesPerSet)) OF
SRS-ResourceId       OPTIONAL,   -- Cond Setup

    resourceType                            CHOICE {
        aperiodic                               SEQUENCE {
            aperiodicSRS-ResourceTrigger                INTEGER (1..maxNrofSRS-TriggerStates-
1),
            csi-RS                                      NZP-CSI-RS-
ResourceId                                     OPTIONAL,    -- Cond NonCodebook
            slotOffset                                  INTEGER
(1..32)                                             OPTIONAL,    -- Need S
            ...
        },
        semi-persistent                         SEQUENCE {
            associatedCSI-RS                            NZP-CSI-RS-
ResourceId                                     OPTIONAL, -- Cond NonCodebook
            ...
        },
        periodic                                SEQUENCE {
            associatedCSI-RS                            NZP-CSI-RS-
ResourceId                                     OPTIONAL, -- Cond NonCodebook
            ...
        }
    },
    usage                                   ENUMERATED {beamManagement, codebook,
nonCodebook, antennaSwitching},
    alpha                                   Alpha
```

```
                                            OPTIONAL, -- Need S
    p0                                      INTEGER (-
202..24)                                                    OPTIONAL, -- Cond Setup
    pathlossReferenceRS                     CHOICE {
        ssb-Index                               SSB-Index,
        csi-RS-Index                            NZP-CSI-RS-ResourceId
    }

SRS-SpatialRelationInfo ::=             SEQUENCE {
    servingCellId                           ServCellIndex
OPTIONAL,    -- Need S
    referenceSignal                         CHOICE {
        ssb-Index                               SSB-Index,
        csi-RS-Index                            NZP-CSI-RS-ResourceId,
        srs                                     SEQUENCE {
            resourceId                              SRS-ResourceId,
            uplinkBWP                               BWP-Id
        }
    }
}
```

In Table 7, *usage* is a higher layer parameter indicating whether an SRS resource set is used for beam management, codebook-based transmission, or non-codebook-based transmission. The parameter *usage* corresponds to an L1 parameter '*SRS-SetUse*'. A parameter '*spatialRelationInfo*' indicates the configuration of a spatial relation between a reference RS and a target SRS. In this case, the reference RS may be an SSB, a CSI-RS, or an SRS corresponding to the L1 parameter '*SRS-SpatialRelationInfo*'. The parameter *usage* is configured for each SRS resource set.

The UE may determine a Tx beam for an SRS resource to be transmitted based on *SRS-SpatialRelationInfo* included in the *SRS-Config* IE (S710). In this case, *SRS-SpatialRelationInfo* may be configured for each SRS resource and indicate whether to apply the same beam as that used for the SSB, CSI-RS, or SRS for each SRS resource. In addition, *SRS-SpatialRelationInfo* may or may not be configured for each SRS resource.

If *SRS-SpatialRelationInfo* is configured for the SRS resource, the UE may apply the same beam as that used for the SSB, CSI-RS, or SRS to the SRS resource and transmit the SRS resource. However, if *SRS-SpatialRelationInfo* is not configured for the SRS resource, the UE may arbitrarily determine the Tx beam and transmits the SRS on the determined Tx beam (S720).

Specifically, for a P-SRS with '*SRS-ResourceConfigType*' set to 'periodic':

1) If *SRS-SpatialRelationInfo* is set to 'SSB/PBCH', the UE may transmit the SRS by applying the same spatial domain Rx filter as that used for receiving an SSB/PBCH (or applying a spatial domain transmission filter generated from the corresponding filter); or

2) If *SRS-SpatialRelationInfo* is set to 'CSI-RS', the UE may transmit the SRS by applying the same spatial domain transmission filter as that used for receiving a periodic CSI-RS or a SP CSI-RS; or

3) If *SRS-SpatialRelationInfo* is set to 'SRS', the UE may transmit the SRS by applying the same spatial domain transmission filter as that used for transmitting a periodic SRS.

Even if '*SRS-ResourceConfigType*' is set to 'SP-SRS' or 'AP-SRS', a beam may be determined and transmitted similarly to the above.

Additionally, the UE may or may not receive feedback on the SRS from the BS as described in the following three cases (S730).

1) When *Spatial_Relation_Info* is configured for all SRS resources in an SRS resource set, the UE may transmit the SRS on a beam indicated by the BS. For example, if *Spatial_Relation_Info* all indicates the same SSB, CSI-RS resource indicator (CRI), or SRS resource indicator (SRI), the UE may repeatedly transmit the SRS on the same beam. In this case, the BS may select the Rx beam as shown in FIG. 6(a).

2) *Spatial_Relation_Info* may not be configured for all SRS resources in an SRS resource set. In this case, the UE may freely transmit the SRS while changing the beam. That is, in this case, the LTE may sweep the Tx beam as shown in FIG. 6(b).

3) *Spatial_Relation_Info* may be configured only for some SRS resources in an SRS resource set. In this case, for the SRS resources in which *Spatial_Relation_Info* is configured, the UE may transmit the SRS on the indicated beam. For SRS resources in which *Spatial_Relation_Info* is not configured, the UE may transmit the SRS by randomly selecting and applying the Tx beam.

## Embodiments

The following symbols/abbreviations/terms are used in this document.

- PDCCH: Physical Downlink Control CHannel
- PDSCH: Physical Downlink Shared CHannel
- PUSCH: Physical Uplink Shared CHannel
- CSI: Channel State Information
- RRM: Radio Resource Management
- SCS: Subcarrier Spacing
- RLM: Radio Link Monitoring
- DCI: Downlink Control Information
- CAP: Channel Access Procedure
- Ucell: Unlicensed Cell
- TBS: Transport Block Size
- SLIV: Starting and Length Indicator Value (The SLIV is a field that indicates the starting symbol index and the number of symbols of a slot for a PDSCH and/or PUSCH, and the SLIV is carried on a PDCCH scheduling the corresponding PDSCH and/or PUSCH.)
- BWP: Bandwidth Part (The BWP may be composed of consecutive RBs in the frequency domain and correspond to one numerology (e.g., SCS, CP length, slot/mini-slot duration). In addition, a plurality of BWPs may be configured on one carrier (the number of BWPs per carrier may also be limited), but the number of active BWPs (e.g., one) may be limited for each carrier.)
- CORESET: Control Resource Set (The CORESET means a time frequency resource region capable of transmitting a PDCCH, and the number of CORESETs per BWP may be limited.)
- REG: Resource Element Group
- SFI: Slot Format Indicator (The SFI is an indicator that indicates the DL/LTL direction at the symbol level in specific slot(s), and the SFI is transmitted over a group-common PDCCH.)
- COT: Channel Occupancy Time
- SPS: Semi-persistent Scheduling
- PLMN ID: Public Land Mobile Network Identifier

In 3GPP NR systems, operations in a band below 52.6 GHz are defined. In addition, discussion is ongoing to operate the NR systems in licensed and/or unlicensed bands of 60/70 GHz (e.g., bands from 52.6 GHz to 71 GHz). In the NR system operating in the 60/70 GHz bands (such a system is referred to as high frequency (HF)-NR for convenience), a new OFDM numerology based on a large SCS (e.g., 240 kHz, 480 kHz, 960 kHz, etc.) compared to the SCS of the legacy NR system (e.g. 15 kHz, 30 kHz, 60 kHz, 120 kHz, etc.) may be introduced and applied in consideration of the radio channel characteristics, such as higher frequency and wider bandwidth than the legacy NR system, and larger phase noise and larger Doppler shift due to high frequency bands. Considering that the CP length decreases due to the use of a large SCS, it is necessary to additionally consider the effects of delay spread and phase noise of a radio channel, and a beam switching time. In particular, the present disclosure proposes a signal/data transmission/reception method in consideration of the effect of the beam switching time.

In the NR system millimeter wave bands (e.g., bands from 24 MHz to 52.6 GHz) are defined as FR2 as shown in Table 3. The SCS of an SS/PBCH block in FR2 bands may be either 120 or 240 kHz, and the SCS of other signals/channels may be either 60 or 120 kHz. In the HF-NR system, an SCS larger than those applied to the FR2 bands may be introduced. If the scalability of an OFDM symbol duration and a CP length defined in the current NR system is maintained, an OFDM symbol duration and a CP length may be defined for each SCS as shown in Table 8 below.

[Table 8]

| SCS [kHz] | 120 | 240 | 480 | 960 |
|---|---|---|---|---|
| Symbol duration | 8.33 us | 4.17 us | 2.08 us | 1.04 us |
| CP length | 586 ns | 293 ns | 146 ns | 73 ns |

As the CP length becomes shorter, the beam switching time may affect signal transmission and reception of the UE. For example, when the beam switching time of the UE is X ns (e.g., X=100), if the SCS is set 960 kHz as shown in Table 8, the LTE may perform signal transmission and reception in which beam switching between symbol #n and symbol #(n+1) is required. When the UE needs to perform the beam switching, a beam switching time required to perform the beam switching may be required. Hereinafter, when it is said that beam switching is required, it may be interpreted to mean that a beam switching time is required. In this case, if the beam switching time is longer than the CP length (e.g., 73 ns), distortion may occur during signal transmission and reception. Also, even when the CP length is longer than the beam switching time, if the difference between the CP length and the beam switching time is significantly small, distortion may occur during signal transmission and reception.

The beam switching time may vary depending on the LTE implementation. Signaling for reporting UE capability for beam switching time may be introduced. Specifically, the UE may report information about a beam switching time required to perform beam switching to the BS. As an example, the beam switching time reported by the UE to the BS may be Y ns (e.g., Y=200), and an SCS of 480 kHz may be configured as shown in Table 8 above. In this case, if the UE performs signal transmission and reception where beam switching between symbol #n and symbol #(n+1) is required, the beam switching time (200 ns) is longer than the CP length (e.g., 146 ns), and as a result, distortion may occur during signal transmission and reception. When the beam switching time is longer than the CP length (e.g., 146 ns) (or if the difference between the CP length and the beam switching time is significantly small), distortion may occur during the signal transmission and reception. As another example, the beam switching time reported by the LTE to the BS is Y ns (e.g., Y=140), and an SCS of 480 kHz may be configured as shown in Table 8. In this case, if the LTE performs signal transmission and reception where beam switching between symbol #n and symbol #(n+1) is required, the difference between the CP length (e.g., 146 ns) and the beam switching time (140 ns) is significantly reduced, and as a result, distortion may occur during the signal transmission and reception. Accordingly, the present disclosure proposes methods for solving the degradation of signal transmission/reception performance, which may be caused by the beam switching time of the LTE or BS.

Specifically, when the UE receives DL signal #2 in a symbol immediately after receiving DL signal #1 (or when the BS transmits DL signal #2 in a symbol immediately after transmitting DL signal #1), the UE (or BS) may need to perform beam switching. In this case, if the CP of DL signal #1 is not sufficient to perform the beam switching, the UE may experience performance degradation in receiving DL signal #2 (or DL signal #1) (or the BS may experience performance degradation in transmitting DL signal #2 (or DL signal #1)). In addition, when the UE transmits UL signal #2 in a symbol immediately after transmitting UL signal #1 (or when the BS receives UL signal #2 in a symbol immediately after receiving UL signal #1), the LTE (or BS) may need to perform beam switching. In this case, if the CP is not sufficient to perform the beam switching, the UE may experience performance degradation in transmitting UL signal #2 (or UL signal #1) (or the BS may experience performance degradation in receiving UL signal #2 (or UL signal #1)). Accordingly, the present disclosure proposes a DL signal reception (or transmission) method for solving performance degradation in DL signal transmission/reception and a LTL signal transmission (or reception) method for solving performance degradation in LTL signal transmission/reception.

In this specification, a DL signal/channel may mean a DL signal, a DL control channel, or a DL data channel supported by NR. Specifically, the DL signal/channel may include a CSI-RS, a PDCCH (or CORESET), or a PDSCH. In this specification, when it is said that a (DL) beam switching time is required, it may mean that TCI state IDs associated with two adjacent DL signals/channels are different from each other (in the time domain), RSs in the QCL relationship are different from each other, or associated SSB indices are different from each other.

In this specification, a LTL signal/channel may mean a LTL signal, a LTL control channel, or a UL data channel supported by NR. Specifically, the UL signal/channel may be a PRACH, a PUSCH, a PUCCH, or a sounding reference signal (SRS). In this specification, when it is said that a (UL) beam switching time is required, it may be interpreted to mean that SRS resource (set) IDs associated with two adjacent LTL signals/channels are different from each other (in time), RSs configured by the parameter *Spatial_Relation_Info* are different from each other, or associated SSB indices are different from each other.

In addition, in the present specification, when there are signal/channel #M and signal/channel #N where M<N, it may mean that signal/channel #M is earlier than signal/channel #N in the time domain (signal/channel #M precedes signal/channel #N in the time domain). In addition, signal/channel #M and signal/channel #N may be transmitted or received on different carriers. For example, signal/channel #M may be transmitted (or received) on carrier #1, and signal/channel #N may be transmitted (or received) on carrier #2, where carrier #1 and carrier #2 may be belong to the same band and in the carrier aggregation relationship (i.e., intra-band carrier aggregation).

The methods proposed in the present disclosure may be applied when a beam switching time is required (or necessary). Preferably, the methods proposed in the present disclosure may be applied only when the beam switching time is more than a specific value (e.g., CP length). In this case, the beam switching time may be predefined or determined based on UE capability (signaling). Whether the beam switching time is more than the specific value (e.g., CP length) may be determined based on a combination of the beam switching time and an SCS applied to a signal/channel/BWP. Alternatively, when the beam switching time is fixed, whether the beam switching time is more than the specific value may be determined based on the SCS applied to the signal/channelBWP. When the methods proposed in this specification are not applied, the beam switching time may not be considered when a signal/channel is transmitted/received.

## 1) Receiver (Entity A) (e.g., UE):

**[Method #1-1] When the beam switching time of the UE is required between DL signal/channel #1 and DL signal/channel #2 (for example, consecutive in the time domain), the UE may expect that an at least n-symbol gap (e.g., n=1) is configured between the corresponding channels.**

When the beam switching time of the UE is required between DL signal/channel #1 and DL signal/channel #2, and when the interval between DL signal/channel #1 and DL signal/channel #2 is less than the n-symbol gap (e.g., n=1), the LTE may receive no signal/channel in the first m (m<=n) (e.g., m=1) symbols of DL signal/channel #2 to secure the at least n-symbol gap. The at least n-symbol gap may mean a time gap composed of n symbols. In this case, no modulation symbols may be mapped to the first m symbols of DL signal/channel #2 (e.g., rate-matching). In addition, the UE may receive DL signal/channel #2 from the first symbol but exclude the first m symbols of DL signal/channel #2 from decoding (e.g., puncturing). That is, the LTE may receive DL signal/channel #2 from the first symbol but puncture the first m symbols of DL signal/channel #2 during decoding.

Alternatively, when the beam switching time of the UE is required between DL signal/channel #1 and DL signal/channel #2, and when the interval between DL signal/channel #1 and DL signal/channel #2 is less than the n-symbol gap (e.g., n=1), the UE may receive no signal/channel in the last m (m<=n) (e.g., m=1) symbols of DL signal/channel #1 to secure the at least n-symbol gap. In this case, no modulation symbols may be mapped to the last m symbols of DL signal/channel #1 (e.g., rate matching). In addition, the UE may receive DL signal/channel #1 in a duration of all allocated symbols but exclude the last m symbols of DL signal/channel #1 from decoding (e.g., puncturing).

In this case, whether rate matching (or puncturing) is performed on the last m symbols of DL signal/channel #1 or on the first m symbols of DL signal/channel #2 may be determined by priorities according to [Method #1-2] below or configured by higher layer signaling. That is, if DL signal/channel #1 has a higher priority according to [Method #1-2] proposed below, the UE may perform the rate matching (or puncturing) on the first m symbols of DL signal/channel #2. Alternatively, if DL signal/channel #2 has a higher priority according to [Method #1-2] proposed below, the LTE may perform the rate matching (or puncturing) on the last m symbols of DL signal/channel #1. Alternatively, whether the rate matching (or puncturing) is performed on the last m symbols of DL signal/channel #1 or on the first m symbols of DL signal/channel #2 may be directly configured by higher layer signaling.

Alternatively, when the beam switching time of the UE is required between DL signal/channel #1 and DL signal/channel #2, and when the interval between DL signal/channel #1 and DL signal/channel #2 is less than the n-symbol gap (e.g., n=1), the UE may not receive DL signal/channel #2 (or DL signal/channel #1).

**[Method #1-2] The beam switching time is applied only to a specific DL signal/channel according to priorities.**

When the UE receives DL signal/channel #1 and DL signal/channel #2 (for example, consecutive in the time domain) with no symbol gap, and when the beam switching time of the UE is required between the two signals/channels, the UE may receive by applying the beam switching time only to a specific DL signal/channel. In this case, a time duration (e.g., symbols, samples within a symbol, etc.) to which the beam switching time is applied may be rate-matched or punctured at the symbol level. Alternatively, the time duration may be excluded from the reception at the sample level (e.g., at the sub-symbol level).

Applying the beam switching time to the specific DL signal/channel may mean that beam switching is performed in a time duration including the specific DL signal/channel. In addition, applying the beam switching time to the specific DL signal/channel may mean that rate matching or puncturing is performed on some symbols or samples included in the specific DL signal/channel.

According to [Method #1-2], the priorities of DL signal/channel #1 and DL signal/channel #2 may be determined according to a predetermined criterion, and the UE may apply the beam switching time only to a DL signal/channel having a lower priority among DL signals/channels #1 and #2. Specifically, some or all of the following options may be applied as the criterion for determining the priorities.

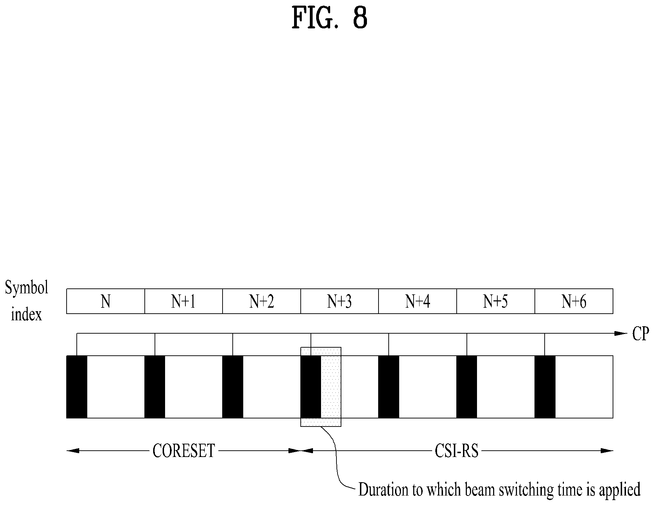

- Option 1: When priorities between DL signals/channels are predefined or configured by higher layer (e.g., RRC) signaling, the UE may apply the beam switching time upon receiving a DL signal/channel with a lower priority. For example, when the priorities are defined in the following order: PDCCH > PDSCH > CSI-RS, and when DL signal/channel #1 is a PDCCH (or CORESET) and DL signal/channel #2 is a CSI-RS as shown in FIG. 8, the LTE may apply the beam switching time to the first symbol of DL signal/channel #2 (CSI-RS). Alternatively, when DL signal/channel #1 and DL signal/channel #2 are the same type of signals/channels, the priority of a signal/channel of which reception is indicated by DCI may be set higher than the priority of a signal/channel configured by higher layer (e.g., RRC) signaling. For example, when DL signal/channel #1 is a CSI-RS configured by higher layer signaling, and when DL signal/channel #2 is a CSI-RS scheduled by DCI, the priority of DL signal/channel #2 may be set higher than that of DL signal/channel #1. Alternatively, when DL signal/channel #1 and DL signal/channel #2 are the same type of signals/channels, and when both are configured by higher layer signaling, the priority may increase as the identifier (ID) value (e.g., CORESET or search space index, SPS configuration index, CSI-RS resource index, etc.) increases (or decreases). Alternatively, a DL signal/channel preceding in the time domain may have a higher priority.

- Option 2: When a DM-RS is located at the boundary between two signals/channels, a DL signal/channel including the DM-RS may have a higher priority. When the DM-RS is located at the boundary between the two signals/channels, it may be interpreted to mean that the DM-RS is located at the last symbol of DL signal/channel #1 preceding in the time domain, or that the DM-RS is located at the first symbol of following DL signal/channel #2. Alternatively, when the DM-RS is located at the boundary between the two signals/channels, it may be interpreted to mean that the DM-RS is configured/indicated to be located at the last symbol of DL signal/channel #1 preceding in the time domain, or that the DM-RS is configured/indicated to be located at the first symbol of following DL signal/channel #2. For example, when the DM-RS is configured/indicated to be located at the first symbol of DL signal/channel #2, DL signal/channel #2 may have a higher priority. Accordingly, the UE may apply the beam switching time to the last symbol of DL signal/channel #1.

- Option 3: When it is configured by a specific rule that the beam switching time is applied to the first symbol of DL signal/channel #2, if the corresponding symbol (i.e., the symbol to which the beam switching time is applied) is for a DM-RS, a rule may be defined so that the DM-RS is shifted to the next symbol. The shift of the DM-RS may mean that a shift operation is performed on the DM-RS. In this case, if an additional DM-RS is configured/indicated, the positions of all DM-RSs in DL signal/channel #2 may be shifted equally in order to maintain the interval between DM-RSs. For example, when it is indicated that DM-RSs are transmitted in the first and fourth symbols in a PDSCH, if the DM-RSs are shifted by one symbol in consideration of the beam switching time, the DM-RSs may be transmitted in the second and fifth symbols in the corresponding PDSCH. In addition, an additional processing time margin may be configured to transmit a HARQ-ACK in response to DL signal/channel #2, due to the shift of the DM-RSs.

- Option 4: Even for PDSCH mapping type B, a DM-RS may be indicated to be transmitted from the second or subsequent symbol. Alternatively, a new PDSCH mapping type (e.g., mapping type C) may be defined, and a DM-RS may be indicated to be transmitted from the second symbol (except for the first symbol) in a PDSCH. In this case, if an additional DM-RS is configured/indicated, the positions of all DM-RSs in DL signal/channel #2 may be shifted equally in order to maintain the interval between DM-RSs for mapping type A or B. For example, for PDSCH mapping type B, if the PDSCH length is 7 symbols, DM-RSs may be defined to be transmitted in the first and fourth symbols. In this case, if it is indicated that the DM-RSs are shifted by one symbol in consideration of the beam switching time, the DM-RSs may be transmitted in the second and fifth symbols in the corresponding PDSCH. In addition, an additional processing time margin may be configured to transmit a HARQ-ACK in response to DL signal/channel #2, due to the shift of the DM-RSs.

- Option 5: When the beam switching time is applied to the last symbol of DL signal/channel #1 or the first symbol of DL signal/channel #2, the LTE may expect that no DM-RS is indicated in the corresponding symbol (i.e., the symbol to which the beam switching time is applied) (alternatively, the UE may not expect that a DM-RS is indicated in the corresponding symbol). That is, the UE may expect that no DM-RS is transmitted in the symbol to which the beam switching time is applied, or the UE may not expect that a DM-RS is transmitted in the symbol to which the beam switching time is applied.

- Option 6: When the beam switching time is applied to the last symbol of PDSCH #1 or the first symbol of PDSCH #2, the UE may first receive PDSCH #2 following in the time domain and then apply the beam switching time to PDSCH #1. The reason for this is that systematic bits are expected to be located at front symbols of a PDSCH due to the characteristics of low-density parity-check (LDPC) coding and frequency-first mapping, and reception of the systematic bits greatly affects successful reception of a codeblock. Alternatively, if one of the two transmitted PDSCH is initial transmission (i.e., when a new data indicator (NDI) among DCI fields is toggled) and the other is retransmission (i.e., when the NDI among the DCI field is not toggled), the LTE may apply the beam switching time to the retransmitted PDSCH.

- Option 7: When the beam switching time is applied to the last symbol of PDSCH #1 or the first symbol of PDSCH #2, the UE may first receive a PDSCH to which a TCI state indicated by DCI is applied and then apply the beam switching time to a PDSCH to which the TCI state is not applied. For example, if the interval between DCI and a PDSCH scheduled by the DCI is more than or equal to a predetermined threshold (*timeDurationForQCL*), a TCI state indicated by the DCI may applied. Otherwise, a default TCI state (e.g., the TCI state of a CORESET having the latest and lowest index or a TCI state corresponding to a specific code point in a TCI field) may be applied. If the default TCI state is applied to PDSCH #1, and if the TCI state indicated by the DCI scheduling the corresponding PDSCH is applied to PDSCH #2, the UE may apply the beam switching time to PDSCH #1. In addition, the above-described method may be equally applied to an aperiodic CSI-RS. For example, when the beam switching time is applied to CSI-RS #1 or CSI-RS #2, the UE may first receive a CSI-RS to which a TCI state indicated by DCI triggering the corresponding aperiodic CSI-RS is applied and apply the beam switching time to a CSI-RS to which the TCI state is not applied.

**[Method #1-3] The beam switching time is divided and applied to two consecutive DL signals/channels.**

When the UE receives DL signal/channel #1 and DL signal/channel #2 (for example, consecutive in the time domain) with no symbol gap, and when the beam switching time of the UE is required between the two signals/channels, the UE may receive DL signal/channel #1 and DL signal/channel #2 by dividing the beam switching time to the two consecutive DL signals/channels. In this case, a time duration (e.g., symbols, samples within a symbol, etc.) to which the beam switching time is applied may be rate-matched or punctured at the symbol level. Alternatively, the time duration may be excluded from the reception at the sample level (e.g., at the sub-symbol level).

Specifically, when two DL signals/channels have similar priorities, the UE may apply the beam switching time to DL signal/channel #1 for a time corresponding to {beam switching time/alpha} and apply the beam switching time to DL signal/channel #2 for a time corresponding to {1-(beam switching time/alpha)}. For example, the value of alpha may be 2, but the present disclosure is not limited thereto. For example, when both DL signal/channel #1 and DL signal/channel #2 are PDCCHs (or when both DL signal/channel #1 and DL signal/channel #2 are either PDSCHs or CSI-RSs), the above-described method may be applied. As another example, when both DL signal/channel #1 and DL signal/channel #2 are PDSCHs, and when both DL signal/channel #1 and DL signal/channel #2 are semi-persistent scheduling (SPS) PDSCHs (or when both DL signal/channel #1 and DL signal/channel #2 are PDSCHs indicated by DL assignment), the above-described method may be applied. As a further example, when both DL signal/channel #1 and DL signal/channel #2 are CSI-RSs, and when both DL signal/channel #1 and DL signal/channel #2 are periodic (or semi-persistent) CSI-RSs (or when both DL signal/channel #1 and DL signal/channel #2 are aperiodic CSI-RSs), the above-described method may be applied.

In this case, the LTE may expect that no DM-RS is indicated in the last symbol of DL signal/channel #1 and/or the first symbol of DL signal/channel #2 (alternatively, the UE may not expect that a DM-RS is indicated in the corresponding symbol).

**[Method #1-4] How the beam switching time is applied is reported to the BS.**

When the UE receives DL signal/channel #1 and DL signal/channel #2 (for example, consecutive in the time domain) with no symbol gap, and when the beam switching time of the LTE is required between the two signals/channels, the LTE may report to the BS whether to divide and apply the beam switching time to the two consecutive DL signals/channels or to apply the beam switching time only to a specific DL signal/channel.

Considering the position of a window in which the fast Fourier transform (FFT) is applied to OFDM symbols, if the UE applies the beam switching time to a DL signal/channel preceding or following in the time domain, the complexity of the UE implementation may be reduced by not changing the position of the corresponding window. For example, the UE may report to the BS that the UE prefers to apply the beam switching time only to the DL signal/channel following in the time domain. After reporting to the BS, the UE may apply the beam switching time to the first symbol of DL signal/channel #2.

**[Method #2-1] It is expected that an at least n-symbol gap is configured between two UL signals/channels.**

When the beam switching time of the UE is required between UL signal/channel #1 and UL signal/channel #2 (for example, consecutive in the time domain), the UE may expect that the at least n-symbol gap (e.g., n=1) is configured between the corresponding channels.

When the beam switching time of the UE is required between UL signal/channel #1 and UL signal/channel #2, and when the interval between UL signal/channel #1 and UL signal/channel #2 is less than the n-symbol gap (e.g., n=1), the LTE may transmit no LTL signal/channel in the first m (m<=n) (e.g., m=1) symbols of UL signal/channel #2 to secure the at least n-symbol gap (e.g., n=1). In this case, no modulation symbols may be mapped to the first m symbols of UL signal/channel #2 (e.g., rate-matching). In addition, the UE may generate LTL signal/channel #2 from the first symbol and puncture the first m symbols in mapping/transmission of UL signal/channel #2.

Alternatively, when the beam switching time of the UE is required between UL signal/channel #1 and UL signal/channel #2, and when the interval between UL signal/channel #1 and UL signal/channel #2 is less than the n-symbol gap (e.g., n=1), the UE may not transmit LTL signal/channel #1 in the last m (m<=n) (e.g., m=1) symbols of LTL signal/channel #1 to secure the at least n-symbol gap (e.g., n=1). In this case, no modulation symbols may be mapped to the last m symbols of UL signal/channel #1 (e.g., rate matching). In addition, the LTE may generate LTL signal/channel #1 in a duration of all allocated symbols but exclude the last m symbols from mapping/transmission of UL signal/channel #1 (e.g., puncturing).

In this case, whether rate matching (or puncturing) is performed on the last m symbols of UL signal/channel #1 or on the first m symbols of UL signal/channel #2 may be determined by priorities according to [Method #2-2] below or configured by higher layer signaling. That is, if the priority of LTL signal/channel #1 determined by [Method #2-2] is higher than the priority of LTL signal/channel #2, the LTE may perform the rate matching (or puncturing) on the first m symbols of LTL signal/channel #2. Alternatively, if the priority of UL signal/channel #2 is higher than the priority of UL signal/channel #1, the UE may perform the rate matching (or puncturing) on the last m symbols of UL signal/channel #1. Alternatively, whether the rate matching (or puncturing) is performed on the last m symbols of UL signal/channel #1 or on the first m symbols of UL signal/channel #2 may be directly configured by higher layer signaling.

In some embodiments, when the beam switching time of the UE is required between UL signal/channel #1 and UL signal/channel #2, and when the interval between UL signal/channel #1 and UL signal/channel #2 is less than the n-symbol gap (e.g., n=1), the UE may not transmit UL signal/channel #2 (or UL signal/channel #1).

**[Method #2-2] The beam switching time is applied only to a specific UL signal/channel according to priorities.**

When the UE transmits UL signal/channel #1 and UL signal/channel #2 (consecutive in the time domain) with no symbol gap, and when the beam switching time of the UE is required between the two signals/channels, the UE may transmit UL signal/channel #1 and UL signal/channel #2 by applying the beam switching time only to a specific UL signal/channel. In this case, a time duration (e.g., symbols, samples within a symbol, etc.) to which the beam switching time is applied may be rate-matched or punctured at the symbol level. Alternatively, the time duration may be excluded from the transmission at the sample level (e.g., at the sub-symbol level). However, the present disclosure is not limited thereto.

Applying the beam switching time to the specific UL signal/channel may mean that beam switching is performed in a time duration including the specific UL signal/channel. In addition, applying the beam switching time to the specific UL signal/channel may mean that rate matching or puncturing is performed on some symbols or samples included in the specific UL signal/channel.

According to [Method #2-2], the priorities of UL signal/channel #1 and UL signal/channel #2 may be determined according to a predetermined criterion, and the UE may apply the beam switching time only to a LTL signal/channel having a lower priority among UL signals/channels #1 and #2. Specifically, some or all of the following options may be applied as the criterion for determining the priorities.

- Option 1: When priorities between LTL signals/channels are predefined or configured by higher layer (e.g., RRC) signaling, the UE may apply the beam switching time upon transmitting a UL signal/channel with a lower priority.

For example, when the priorities are defined in the following order: PRACH > PUCCH > PUSCH > SRS, and when UL signal/channel #1 is a PUCCH and UL signal/channel #2 is an SRS, the UE may apply the beam switching time to the first symbol of the SRS. Alternatively, when UL signal/channel #1 and LTL signal/channel #2 are the same type of signals/channels, the priority of a signal/channel of which transmission is indicated by DCI may be set higher than the priority of a signal/channel configured by higher layer (e.g., RRC) signaling. Alternatively, when UL signal/channel #1 and UL signal/channel #2 are the same type of signals/channels, and when both are configured by higher layer signaling, the priority may increase as the identifier (ID) value (e.g., configured grant (CG) PUSCH configuration index, SRS resource index, PRACH preamble index, etc.) increases (or decreases). Alternatively, a UL signal/channel preceding in the time domain may have a higher priority.

- Option 2: When a DM-RS is located at the boundary between two signals/channels, a UL signal/channel including the DM-RS may have a higher priority. When the DM-RS is located at the boundary between the two signals/channels, it may be interpreted to mean that the DM-RS is located at the last symbol of UL signal/channel #1 preceding in the time domain, or that the DM-RS is located at the first symbol of following UL signal/channel #2. Alternatively, when the DM-RS is located at the boundary between the two signals/channels, it may be interpreted to mean that the DM-RS is configured/indicated to be located at the last symbol of UL signal/channel #1 preceding in the time domain, or that the DM-RS is configured/indicated to be located at the first symbol of following LTL signal/channel #2. For example, when the DM-RS is configured/indicated to be located at the first symbol of UL signal/channel #2, UL signal/channel #2 may have a higher priority. Accordingly, the UE may apply the beam switching time to the last symbol of UL signal/channel #1.

- Option 3: When it is configured by a specific rule that the beam switching time is applied to the first symbol of UL signal/channel #2, if the corresponding symbol (i.e., the symbol to which the beam switching time is applied) is for a DM-RS, a rule may be defined so that the DM-RS is shifted to the next symbol. In this case, if an additional DM-RS is configured/indicated, the positions of all DM-RSs in UL signal/channel #2 may be shifted equally in order to maintain the interval between DM-RSs. For example, when it is indicated that DM-RSs are transmitted in the first and fourth symbols in a PUSCH, if the DM-RSs are shifted by one symbol in consideration of the beam switching time, the DM-RSs may be transmitted in the second and fifth symbols in the corresponding PUSCH.

- Option 4: Even for PUSCH mapping type B, a DM-RS may be indicated to be transmitted from the second or subsequent symbol. Alternatively, a new PUSCH mapping type (e.g., PUSCH mapping type C) may be defined, and a DM-RS may be indicated to be transmitted from the second symbol (except for the first symbol) in a PUSCH. In this case, if an additional DM-RS is configured/indicated, the positions of all DM-RSs in LTL signal/channel #2 may be shifted equally in order to maintain the interval between DM-RSs for mapping type A or B. For example, for PUSCH mapping type B, if the PUSCH length is 7 symbols, DM-RSs may be defined to be transmitted in the first and fourth symbols. In this case, if it is indicated that the DM-RSs are shifted by one symbol in consideration of the beam switching time, the DM-RSs may be transmitted in the second and fifth symbols in the corresponding PUSCH.

- Option 5: When the beam switching time is applied to the last symbol of LTL signal/channel #1 or the first symbol of LTL signal/channel #2, the LTE may expect that no DM-RS is indicated in the corresponding symbol (i.e., the symbol to which the beam switching time is applied) (alternatively, the UE may not expect that a DM-RS is indicated in the corresponding symbol). That is, the UE may expect that no DM-RS is transmitted in the symbol to which the beam switching time is applied, or the UE may not expect that a DM-RS is transmitted in the symbol to which the beam switching time is applied.

- Option 6: When the beam switching time is applied to the last symbol of PUSCH #1 or the first symbol of PUSCH #2, the UE may first receive PUSCH #2 following in the time domain and apply the beam switching time to PUSCH #1. The reason for this is that systematic bits are expected to be located at front symbols of a PUSCH due to the characteristics of LDPC coding and frequency-first mapping, and reception of the systematic bits greatly affects successful reception of a codeblock. Alternatively, if one of the two transmitted PUSCHs is initial transmission (i.e., when an NDI among DCI fields is toggled) and the other is retransmission (i.e., when the NDI among the DCI field is not toggled), the UE may apply the beam switching time to the retransmitted PUSCH.

**[Method #2-3] The beam switching time is divided and applied to two consecutive UL signals/channels.**

When the UE transmits UL signal/channel #1 and UL signal/channel #2 (for example, consecutive in the time domain) with no symbol gap, and when the beam switching time of the LTE is required between the two signals/channels, the LTE may transmit the two UL signals/channels by dividing the beam switching time to the two consecutive UL signals/channels. In this case, a time duration (e.g., symbols, samples within a symbol, etc.) to which the beam switching time is applied may be rate-matched or punctured at the symbol level. Alternatively, the time duration may be excluded from the transmission at the sample level (e.g., at the sub-symbol level).

Specifically, when two UL signals/channels have similar priorities, the UE may apply the beam switching time to UL signal/channel #1 for a time corresponding to {beam switching time/alpha} and apply the beam switching time to UL signal/channel #2 for a time corresponding to {1-(beam switching time/alpha)}. For example, the value of alpha may be 2, but the present disclosure is not limited thereto. For example, when both UL signal/channel #1 and UL signal/channel #2 are PUCCHs (or when both UL signal/channel #1 and UL signal/channel #2 are either PUSCHs or SRSs), the above-described method may be applied. As another example, when both UL signal/channel #1 and UL signal/channel #2 are PUCCHs, and when both UL signal/channel #1 and UL signal/channel #2 are CG PUSCHs (or when both UL signal/channel #1 and UL signal/channel #2 are PUSCHs indicated by UL grants), the above-described method may be applied. As a further example, when both LTL signal/channel #1 and UL signal/channel #2 are SRSs, and when both UL signal/channel #1 and LTL signal/channel #2 are periodic (or semi-persistent) SRSs (or when both LTL signal/channel #1 and LTL signal/channel #2 are aperiodic SRSs), the above-described method may be applied.

In this case, the LTE may expect that no DM-RS is indicated in the last symbol of LTL signal/channel #1 and/or the first symbol of UL signal/channel #2 (alternatively, the UE may not expect that a DM-RS is indicated in the corresponding symbol). That is, the UE may expect that no DM-RS is transmitted in the last symbol of UL signal/channel #1 and/or the first symbol of UL signal/channel #2 (alternatively, the UE may not expect that a DM-RS is transmitted in the last symbol of LTL signal/channel #1 and/or the first symbol of LTL signal/channel #2).

**[Method #2-4] How the beam switching time is applied is reported to the BS.**

When the UE transmits UL signal/channel #1 and UL signal/channel #2 (for example, consecutive in the time domain) with no symbol gap, and when the beam switching time of the LTE is required between the two signals/channels, the LTE may report to the BS whether to divide and apply the beam switching time to the two consecutive LTL signals/channels or to apply the beam switching time only to a specific UL signal/channel.

When the beam switching time is applied to a LTL signal/channel preceding or following in the time domain, the complexity of the LTE implementation may be reduced. For example, the UE may report to the BS that the UE prefers to apply the beam switching time only to the UL signal/channel following in the time domain. After reporting to the BS, the UE may apply the beam switching time to the first symbol of UL signal/channel #2.

The proposed methods related to UL transmission may be applied differently depending on which waveform is configured for the UL transmission. A UL signal/channel in which DFT-s-OFDM is configured may be recovered even if the UL signal/channel is punctured in the time domain for a predetermined period of time. On the other hand, for a LTL signal/channel configured with a CP-OFDM waveform, if the UL signal/channel is punctured in the time domain for a predetermined period of time or more, all subcarriers may be affected, and as a result, it may be difficult to recover the corresponding UL signal/channel. Accordingly, for example, [Method #2-2/3/4] described above may be applied to the UL signal/channel in which DFT-s-OFDM is configured, and [Method #2-1] described above may be applied to the UL signal/channel in which OFDM is configured.

Considering that when the beam switching time is applied to DL signal/channel #2 or UL signal/channel #2 in the proposed methods, it may affect a time region longer than the CP length, it may be defined/configured in advance that the first symbol is configured by extending the CP of the second symbol of DL signal/channel #2 or UL signal/channel #2.

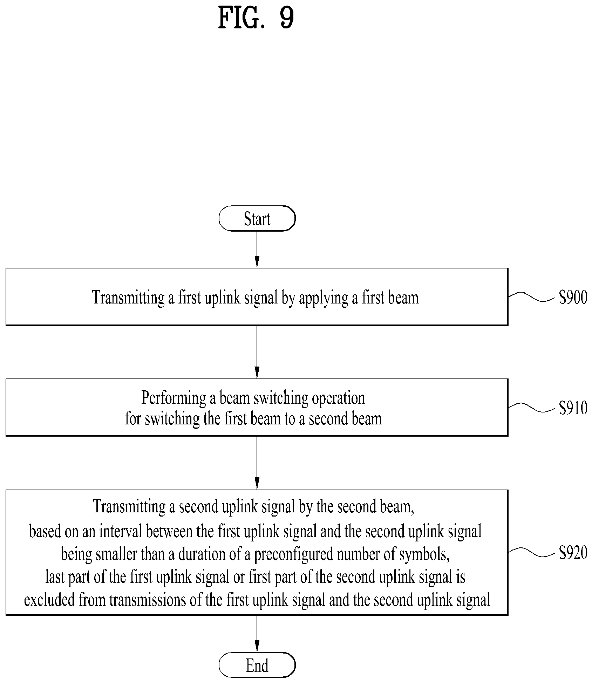

FIG. 9 is a flowchart illustrating operations of a UE according to the proposed embodiments.

Referring to FIG. 9, the UE may transmit a first UL signal by applying a first beam (S900). In addition, the UE may perform a beam switching operation for switching the first beam to a second beam (S910) and transmit a second UL signal by applying the second beam (S920). For example, the first UL signal and the second LTL signal may include at least one of a PRACH, a PUSCH, a PUCCH, or an SRS. In this case, the beam switching operation may be required between the first UL signal and the second UL signal as described above in [Method #2-1] to [Method #2-4]. Accordingly, a beam switching time required for performing the beam switching operation may be required between the first UL signal and the second LTL signal. The first LTL signal and the second LTL signal may correspond to LTL signal/channel #1 and UL signal/channel #2 in [Method #2-1] to [Method #2-4], respectively.

Based on the interval between the first UL signal and the second UL signal being smaller than a duration of a predetermined number of symbols, last several symbols of the first LTL signal or first several symbols of the second LTL signal may be excluded from transmission of the first UL signal and the second UL signal. For example, based on the interval between the first UL signal and the second UL signal being smaller than a predetermined gap consisting of n symbols (e.g., n=1), the last several symbols of the first LTL signal or the first several symbols of the second LTL signal may be excluded from transmission of the first LTL signal and the second LTL signal.

The interval between the first UL signal and the second UL signal being smaller than the duration of the predetermined number of symbols may include the following cases: when the beam switching time is greater than the CP length of the first or second UL signal (or the duration of the predetermined number of symbols); when the beam switching time reported by signaling of LTE capability is greater than the CP length of the first or second LTL signal (or the duration of the predetermined number of symbols); or when the beam switching time is smaller than the CP length (or the duration of the predetermined number of symbols) and the difference between the beam switching time and the CP length (or the duration of the predetermined number of symbols) is smaller than or equal to a threshold. For example, the above-described case may occur when the CP length decreases due to use of a relatively large SCS (e.g., 480 or 960 kHz). When the interval between the first LTL signal and the second LTL signal is not sufficient to perform the beam switching operation, the last several symbols of the first LTL signal or the first several symbols of the second LTL signal may be excluded from transmission of the first UL signal and the second UL signal in order to secure the beam switching time. In this case, the last m symbols of the first LTL signal or the first m symbols of the second UL signal may be excluded from transmission of the first UL signal and the second LTL signal, where m may be smaller than or equal to n.

Excluding the last several symbols of the first UL signal (or the first several symbols of the second LTL signal) from the transmission of the first UL signal (or the second LTL signal) may mean that no modulation symbols are mapped to the last several symbols of the first UL signal (or the first several symbols of the second UL signal) by performing rate matching. Alternatively, excluding the last several symbols of the first UL signal (or the first several symbols of the second UL signal) from the transmission of the first UL signal (or the second UL signal) may mean that the first UL channel (or the second UL channel) is generated for all symbol durations allocated for the first LTL channel (or the second LTL channel), but the last several symbols of the first LTL channel (or the first several symbols of the second UL channel) are excluded from the mapping/transmission process.

A time duration corresponding to the last several symbols of the first UL signal or the first several symbols of the second UL signal may be used as the beam switching time. The use of the beam switching time may mean that the beam switching time is applied as described above in [Method #2-1] to [Method #2-4].

Whether the time duration corresponding to the last several symbols of the first UL signal or the time duration corresponding to the first several symbols of the second LTL signal is used as the beam switching time may be determined according to the priorities of the first UL signal and the second UL signal. Alternatively, it may be configured by higher layer signaling. For example, the priorities of the first UL signal and the second UL signal may be determined according to at least one of Options 1 to 7 of [Method #2-2] described above. When the priority of the first UL signal is higher than that of the second UL signal, the UE may use the time duration corresponding to the first several symbols of the second LTL signal as the beam switching time. Alternatively, when the priority of the second UL signal is higher than that of the first UL signal, the UE may use the time duration corresponding to the last several symbols of the first UL signal as the beam switching time. That is, the UE may apply the beam switching time to some symbols of a UL signal having a lower priority among the two UL signals. Accordingly, even when the interval between the first UL signal and the second UL signal is not sufficient to perform the beam switching operation, the beam switching time may be effectively secured, thereby preventing degradation of signal transmission/reception performance.

## 2) Receiver (Entity B) (e.g., BS):

**[Method #1A-1] When the beam switching time of the UE is required between DL signal/channel #1 and DL signal/channel #2 (for example, consecutive in the time domain), the BS may be constrained to configure an at least n-symbol gap (e.g., n=1) between the corresponding channels.**

When the beam switching time of the UE is required between DL signal/channel #1 and DL signal/channel #2, and when the interval between DL signal/channel #1 and DL signal/channel #2 is less than the n-symbol gap (e.g., n=1), the BS may transmit no signal/channel in the first m (m<=n) (e.g., m=1) symbols of DL signal/channel #2 to secure the at least n-symbol gap (e.g., n=1). The at least n-symbol gap may mean a time gap composed of n symbols. In this case, no modulation symbols may be mapped to the first m symbols of DL signal/channel #2 (e.g., rate-matching). In addition, the BS may generate DL signal/channel #2 from the first symbol but puncture the first m symbols in mapping/transmission of DL signal/channel #2.

Alternatively, when the beam switching time of the UE is required between DL signal/channel #1 and DL signal/channel #2, and when the interval between DL signal/channel #1 and DL signal/channel #2 is less than the n-symbol gap (e.g., n=1), the UE may transmit no signal/channel in the last m (m<=n) (e.g., m=1) symbols of DL signal/channel #1 to secure the at least n-symbol gap (e.g., n=1). In this case, no modulation symbols may be mapped to the last m symbols of DL signal/channel #1 (e.g., rate matching). In addition, the BS may generate DL signal/channel #1 during all symbol durations allocated for DL signal/channel #1 but may exclude the last m symbols from the transmission of DL signal/channel #1 (e.g., puncturing).

In this case, whether rate matching (or puncturing) is performed on the last m symbols of DL signal/channel #1 or on the first m symbols of DL signal/channel #2 may be determined by priorities according to [Method #1A-2] below or configured by higher layer signaling. That is, if DL signal/channel #1 has a higher priority according to [Method #1A-2] proposed below, the BS may perform the rate matching (or puncturing) on the first m symbols of DL signal/channel #2. Alternatively, if DL signal/channel #2 has a higher priority according to [Method #1A-2] proposed below, the BS may perform the rate matching (or puncturing) on the last m symbols of DL signal/channel #1. Alternatively, whether the rate matching (or puncturing) is performed on the last m symbols of DL signal/channel #1 or on the first m symbols of DL signal/channel #2 may be directly configured by higher layer signaling.

**[Method #1A-2] The beam switching time is applied only to a specific DL signal/channel according to priorities.**

When the UE receives DL signal/channel #1 and DL signal/channel #2 (for example, consecutive in the time domain) with no symbol gap, and when the beam switching time of the UE is required between the two signals/channels, the BS may expect that the UE will receive by applying the beam switching time only to a specific DL signal/channel, or the BS may transmit by applying the beam switching time only to the specific DL signal/channel. In this case, a time duration (e.g., symbols, samples within a symbol, etc.) to which the beam switching time is applied may be rate-matched or punctured at the symbol level. Alternatively, the time duration may be excluded from the transmission at the sample level (e.g., at the sub-symbol level).

Applying the beam switching time to the specific DL signal/channel may mean that beam switching is performed in a time duration including the specific DL signal/channel. In addition, applying the beam switching time to the specific DL signal/channel may mean that rate matching or puncturing is performed on some symbols or samples included in the specific DL signal/channel.

According to [Method #1A-2], the priorities of DL signal/channel #1 and DL signal/channel #2 may be determined according to a predetermined criterion, and the BS may transmit DL signals/channels #1 and #2 by applying the beam switching time only to a DL signal/channel having a lower priority among DL signals/channels #1 and #2. Alternatively, the BS may expect that the UE will receive DL signals/channels #1 and #2 by applying the beam switching time only to the DL signal/channel having the lower priority. Specifically, some or all of the following options may be applied as the criterion for determining the priorities.

- Option 1: When priorities between DL signals/channels are predefined or configured by higher layer (e.g., RRC) signaling, the BS may apply the beam switching time upon transmitting a DL signal/channel with a lower priority. Alternatively, the BS may expect that the UE will apply the beam switching time when receiving the DL signal/channel having the lower priority. For example, when the priorities are defined in the following order: PDCCH > PDSCH > CSI-RS, and when DL signal/channel #1 is a PDCCH (or CORESET) and DL signal/channel #2 is a CSI-RS, the BS may transmit by applying the beam switching time to the first symbol of the CSI-RS or expect that the UE will apply the beam switching time to the first symbol of the CSI-RS when receiving the CSI-RS. Alternatively, when DL signal/channel #1 and DL signal/channel #2 are the same type of signals/channels, the priority of a signal/channel of which reception is indicated by DCI may be set higher than the priority of a signal/channel configured by higher layer signaling. For example, when DL signal/channel #1 is a CSI-RS configured by higher layer signaling, and when DL signal/channel #2 is a CSI-RS scheduled by DCI, the priority of DL signal/channel #2 may be set higher than that of DL signal/channel #1. Alternatively, when DL signal/channel #1 and DL signal/channel #2 are the same type of signals/channels, and when both are configured by higher layer (e.g., RRC) signaling, the priority may increase as the identifier (ID) value (e.g., CORESET, search space index, SPS configuration index, CSI-RS resource index, etc.) increases (or decreases). Alternatively, a DL signal/channel preceding in the time domain may have a higher priority.

- Option 2: When a DM-RS is located at the boundary between two signals/channels, a DL signal/channel including the DM-RS may have a higher priority. When the DM-RS is located at the boundary between the two signals/channels, it may be interpreted to mean that the DM-RS is located at the last symbol of DL signal/channel #1 preceding in the time domain, or that the DM-RS is located at the first symbol of following DL signal/channel #2. Alternatively, when the DM-RS is located at the boundary between the two signals/channels, it may be interpreted to mean that the DM-RS is configured/indicated to be located at the last symbol of DL signal/channel #1 preceding in the time domain, or that the DM-RS is configured/indicated to be located at the first symbol of following DL signal/channel #2. For example, when the DM-RS is configured/indicated to be located at the first symbol of DL signal/channel #2, DL signal/channel #2 may have a higher priority. Accordingly, the BS may apply the beam switching time to the last symbol of DL signal/channel #1. Alternatively, the BS may expect that the LTE will apply the beam switching time to the last symbol of DL signal/channel #1 when receiving DL signals/channels #1 and #2.

- Option 3: When it is configured by a specific rule that the beam switching time is applied to the first symbol of DL signal/channel #2, if the corresponding symbol (i.e., the symbol to which the beam switching time is applied) is for a DM-RS, a rule may be defined so that the DM-RS is shifted to the next symbol. The shift of the DM-RS may mean that a shift operation is performed on the DM-RS. In this case, if an additional DM-RS is configured/indicated, the positions of all DM-RSs in DL signal/channel #2 may be shifted equally in order to maintain the interval between DM-RSs. For example, when it is indicated that DM-RSs are transmitted in the first and fourth symbols in a PDSCH, if the DM-RSs are shifted by one symbol in consideration of the beam switching time, the DM-RSs may be transmitted in the second and fifth symbols in the corresponding PDSCH. In addition, an additional processing time margin may be configured to transmit a HARQ-ACK in response to DL signal/channel #2, due to the shift of the DM-RSs.

- Option 4: Even for PDSCH mapping type B, a DM-RS may be indicated to be transmitted from the second or subsequent symbol. Alternatively, a new PDSCH mapping type (e.g., mapping type C) may be defined, and a DM-RS may be indicated to be transmitted from the second symbol (except for the first symbol) in a PDSCH. In this case, if an additional DM-RS is configured/indicated, the positions of all DM-RSs in DL signal/channel #2 may be shifted equally in order to maintain the interval between DM-RSs for mapping type A or B. For example, for PDSCH mapping type B, if the PDSCH length is 7 symbols, DM-RSs may be defined to be transmitted in the first and fourth symbols. In this case, if it is indicated that the DM-RSs are shifted by one symbol in consideration of the beam switching time, the DM-RSs may be transmitted in the second and fifth symbols in the corresponding PDSCH. In addition, an additional processing time margin may be configured to transmit a HARQ-ACK in response to DL signal/channel #2, due to the shift of the DM-RSs.

- Option 5: When the beam switching time is applied to the last symbol of DL signal/channel #1 or the first symbol of DL signal/channel #2, the BS may be constrained to indicate no DM-RS in the corresponding symbol (i.e., the symbol to which the beam switching time is applied). That is, the BS may impose a restriction such that no DM-RS is transmitted in the symbol to which the beam switching time is applied.

- Option 6: When the beam switching time is applied to the last symbol of PDSCH #1 or the first symbol of PDSCH #2, the BS may expect that the UE will first receive PDSCH #2 following in the time domain and then apply the beam switching time to PDSCH #1. The reason for this is that systematic bits are expected to be located at front symbols of a PDSCH due to the characteristics of LDPC coding and frequency-first mapping, and reception of the systematic bits greatly affects successful reception of a codeblock. Alternatively, if one of the two transmitted PDSCH is initial transmission (i.e., when an NDI among DCI fields is toggled) and the other is retransmission (i.e., when the NDI among the DCI field is not toggled), the BS may apply a beam switching time to the retransmission PDSCH.

- Option 7: When the beam switching time is applied to the last symbol of PDSCH #1 or the first symbol of PDSCH #2, the BS may first transmit a PDSCH to which a TCI state indicated by DCI is applied and then apply the beam switching time to a PDSCH to which the TCI state is not applied. For example, if the interval between DCI and a PDSCH scheduled by the DCI is more than or equal to a predetermined threshold (*timeDurationForQCL*), a TCI state indicated by the DCI may applied to the PDSCH. Otherwise, a default TCI state (e.g., the TCI state of a CORESET having the latest and lowest index or a TCI state corresponding to a specific code point in a TCI field) may be applied to the PDSCH. If the default TCI state is applied to PDSCH #1, and if the TCI state indicated by the DCI scheduling the corresponding PDSCH is applied to PDSCH #2, the beam switching time may be applied to PDSCH #1. In addition, the above-described method may be equally applied to an aperiodic CSI-RS. For example, when the beam switching time is applied to CSI-RS #1 or CSI-RS #2, the BS may first transmit a CSI-RS to which a TCI state indicated by DCI triggering the corresponding aperiodic CSI-RS is applied and apply the beam switching time to a CSI-RS to which the TCI state indicated by the DCI is not applied.

**[Method #1A-3] The beam switching time is divided and applied to two consecutive DL signals/channels.**

When the UE receives DL signal/channel #1 and DL signal/channel #2 (for example, consecutive in the time domain) with no symbol gap, and when the beam switching time of the UE is required between the two signals/channels, the BS may expect that the UE will receive DL signal/channel #1 and DL signal/channel #2 by dividing the beam switching time to the two consecutive DL signals/channels. Alternatively, the BS may transmit DL signal/channel #1 and DL signal/channel #2 by dividing the beam switching time to the two consecutive DL signals/channels. In this case, a time duration (e.g., symbols, samples within a symbol, etc.) to which the beam switching time is applied may be rate-matched or punctured at the symbol level. Alternatively, the time duration may be excluded from the transmission at the sample level (e.g., at the sub-symbol level).

Specifically, when two DL signals/channels have similar priorities, the BS may apply the beam switching time to DL signal/channel #1 for a time corresponding to {beam switching time/alpha} and apply the beam switching time to DL signal/channel #2 for a time corresponding to {1-(beam switching time/alpha)}. For example, the value of alpha may be 2, but the present disclosure is not limited thereto. For example, when both DL signal/channel #1 and DL signal/channel #2 are PDCCHs (or when both DL signal/channel #1 and DL signal/channel #2 are either PDSCHs or CSI-RSs), the above-described method may be applied. As another example, when both DL signal/channel #1 and DL signal/channel #2 are PDSCHs, and when both DL signal/channel #1 and DL signal/channel #2 are SPS PDSCHs (or when both DL signal/channel #1 and DL signal/channel #2 are PDSCHs indicated by DL assignment), the above-described method may be applied. As a further example, when both DL signal/channel #1 and DL signal/channel #2 are CSI-RSs, and when both DL signal/channel #1 and DL signal/channel #2 are periodic (or semi-persistent) CSI-RSs (or when both DL signal/channel #1 and DL signal/channel #2 are aperiodic CSI-RSs), the above-described method may be applied.

In this case, the BS may be constrained to indicate no DM-RS in the last symbol of DL signal/channel #1 and/or the first symbol of DL signal/channel #2.

**[Method #1A-4] How to apply the beam switching time is reported to the BS.**

When the UE receives DL signal/channel #1 and DL signal/channel #2 (for example, consecutive in the time domain) with no symbol gap, and when the beam switching time of the UE is required between the two signals/channels, the BS may receive from the UE a report on whether the UE divides and applies the beam switching time to the two consecutive DL signals/channels or applies the beam switching time only to a specific DL signal/channel.

Considering the position of a window in which the FFT is applied to OFDM symbols, if the LTE applies the beam switching time to a DL signal/channel preceding or following in the time domain, the complexity of the LTE implementation may be reduced by not changing the position of the corresponding window. For example, the UE may report to the BS that the UE prefers to apply the beam switching time only to the DL signal/channel following in the time domain. After reporting to the BS, the UE may apply the beam switching time to the first symbol of DL signal/channel #2. The BS may recognize that the UE prefers to apply the beam switching time only to the DL signal/channel following in the time domain, based on information reported by the UE. Accordingly, the BS may expect that the UE will apply the beam switching time to the first symbol of DL signal/channel #2.

**[Method #2A-1] It is expected that an at least n-symbol gap is configured between two UL signals/channels.**

When the beam switching time of the UE is required between UL signal/channel #1 and UL signal/channel #2 (for example, consecutive in the time domain), the BS may be constrained to configure the at least n-symbol gap (e.g., n=1) between the corresponding channels.

When the beam switching time of the BS is required between UL signal/channel #1 and UL signal/channel #2, and when the interval between UL signal/channel #1 and UL signal/channel #2 is less than the n-symbol gap (e.g., n=1), the BS may receive no LTL signal/channel in the first m (m<=n) (e.g., m=1) symbols of UL signal/channel #2 to secure the at least n-symbol gap (e.g., n=1). In this case, no modulation symbols may be mapped to the first m symbols of UL signal/channel #2 (e.g., rate-matching). In addition, the BS may receive UL signal/channel #2 from the first symbol but exclude the first m symbols of LTL signal/channel #2 from decoding (e.g., puncturing).

Alternatively, when the beam switching time of the BS is required between UL signal/channel #1 and UL signal/channel #2, and when the interval between UL signal/channel #1 and UL signal/channel #2 is less than the n-symbol gap (e.g., n=1), the BS may not receive LTL signal/channel #1 in the last m (m<=n) (e.g., m=1) symbols of LTL signal/channel #1 to secure the at least n-symbol gap (e.g., n=1). In this case, no modulation symbols may be mapped to the last m symbols of UL signal/channel #1 (e.g., rate matching). In addition, the BS may receive DL signal/channel #1 in a duration of all allocated symbols but exclude the last m symbols of UL signal/channel #1 from decoding (e.g., puncturing).

In this case, whether rate matching (or puncturing) is performed on the last m symbols of UL signal/channel #1 or on the first m symbols of UL signal/channel #2 may be determined by priorities according to [Method #2A-2] below or configured by higher layer signaling. That is, if the priority of LTL signal/channel #1 determined by [Method #2-2] is higher than the priority of LTL signal/channel #2, the BS may perform the rate matching (or puncturing) on the first m symbols of LTL signal/channel #2. Alternatively, if the priority of LTL signal/channel #2 is higher than the priority of LTL signal/channel #1, the BS may perform the rate matching (or puncturing) on the last m symbols of UL signal/channel #1. Alternatively, whether the rate matching (or puncturing) is performed on the last m symbols of UL signal/channel #1 or on the first m symbols of UL signal/channel #2 may be directly configured by higher layer signaling.

**[Method #2A-2] The beam switching time is applied only to a specific UL signal/channel according to priorities.**

When the UE transmits UL signal/channel #1 and UL signal/channel #2 (for example, consecutive in the time domain) with no symbol gap, and when the beam switching time of the UE is required between the two signals/channels, the BS may expect that the UE will transmit by applying the beam switching time only to a specific UL signal/channel. Alternatively, the BS may receive UL signal/channel #1 and UL signal/channel #2 by applying the beam switching time only to the specific UL signal/channel. In this case, a time duration (e.g., symbols, samples within a symbol, etc.) to which the beam switching time is applied may be rate-matched or punctured at the symbol level. Alternatively, the time duration may be excluded from the reception at the sample level (e.g., at the sub-symbol level). However, the present disclosure is not limited thereto.

Applying the beam switching time to the specific UL signal/channel may mean that beam switching is performed in a time duration including the specific UL signal/channel. In addition, applying the beam switching time to the specific UL signal/channel may mean that rate matching or puncturing is performed on some symbols or samples included in the specific UL signal/channel.

According to [Method #2A-2], the priorities of UL signal/channel #1 and UL signal/channel #2 may be determined according to a predetermined criterion. The BS may receive by applying the beam switching time only to a UL signal/channel having a lower priority among UL signals/channels #1 and #2 (alternatively, the BS may expect that the UE will transmit by applying the beam switching time only to the UL signal/channel having the lower priority among UL signals/channels #1 and #2). Specifically, some or all of the following options may be applied as the criterion for determining the priorities.

- Option 1: When priorities between LTL signals/channels are predefined or configured by higher layer (e.g., RRC) signaling, the BS may expect that the UE will apply the beam switching time upon transmitting a LTL signal/channel with a lower priority. Alternatively, the BS may apply the beam switching time when receiving the UL signal/channel having the lower priority. For example, when the priorities are defined in the following order: PRACH > PUCCH > PUSCH > SRS, and when UL signal/channel #1 is a PUCCH and UL signal/channel #2 is an SRS, the BS may expect that the UE will transmit the SRS by applying the beam switching time to the first symbol of the SRS (alternatively, the BS may receive the SRS by applying the beam switching time to the first symbol of the SRS). Alternatively, when UL signal/channel #1 and UL signal/channel #2 are the same type of signals/channels, the priority of a signal/channel of which transmission is indicated by DCI may be set higher than the priority of a signal/channel configured by higher layer (e.g., RRC) signaling. Alternatively, when UL signal/channel #1 and UL signal/channel #2 are the same type of signals/channels, and when both are configured by higher layer signaling, the priority may increase as the identifier (ID) value (e.g., CG PUSCH configuration index, SRS resource index, PRACH preamble index, etc.) increases (or decreases). Alternatively, a UL signal/channel preceding in the time domain may have a higher priority.

- Option 2: When a DM-RS is located at the boundary between two signals/channels, a UL signal/channel including the DM-RS may have a higher priority. When the DM-RS is located at the boundary between the two signals/channels, it may be interpreted to mean that the DM-RS is located at the last symbol of UL signal/channel #1 preceding in the time domain, or that the DM-RS is located at the first symbol of following UL signal/channel #2. Alternatively, when the DM-RS is located at the boundary between the two signals/channels, it may be interpreted to mean that the DM-RS is configured/indicated to be located at the last symbol of UL signal/channel #1 preceding in the time domain, or that the DM-RS is configured/indicated to be located at the first symbol of following LTL signal/channel #2. For example, when the DM-RS is configured/indicated to be located at the first symbol of LTL signal/channel #2, UL signal/channel #2 may have a higher priority. Accordingly, the BS may expect that the LTE will apply the beam switching time to the last symbol of LTL signal/channel #1 (alternatively, the BS may receive UL signal/channel #1 by applying the beam switching time to the last symbol of UL signal/channel #1).

- Option 3: When it is configured by a specific rule that the beam switching time is applied to the first symbol of UL signal/channel #2, if the corresponding symbol (i.e., the symbol to which the beam switching time is applied) is for a DM-RS, a rule may be defined so that the DM-RS is shifted to the next symbol. In this case, if an additional DM-RS is configured/indicated, the positions of all DM-RSs in UL signal/channel #2 may be shifted equally in order to maintain the interval between DM-RSs. For example, when it is indicated that DM-RSs are transmitted in the first and fourth symbols in a PUSCH, if the DM-RSs are shifted by one symbol in consideration of the beam switching time, the DM-RSs may be transmitted in the second and fifth symbols in the corresponding PUSCH.

- Option 4: Even for PUSCH mapping type B, a DM-RS may be indicated to be transmitted from the second or subsequent symbol. Alternatively, a new PUSCH mapping type (e.g., PUSCH mapping type C) may be defined, and a DM-RS may be indicated to be transmitted from the second symbol (except for the first symbol) in a PUSCH. In this case, if an additional DM-RS is configured/indicated, the positions of all DM-RSs in LTL signal/channel #2 may be shifted equally in order to maintain the interval between DM-RSs for mapping type A or B. For example, for PUSCH mapping type B, if the PUSCH length is 7 symbols, DM-RSs may be defined to be transmitted in the first and fourth symbols. In this case, if it is indicated that the DM-RSs are shifted by one symbol in consideration of the beam switching time, the DM-RSs may be transmitted in the second and fifth symbols in the corresponding PUSCH.

- Option 5: When the beam switching time is applied to the last symbol of LTL signal/channel #1 or the first symbol of LTL signal/channel #2, the BS may be constrained to indicate no DM-RS in the corresponding symbol (i.e., the symbol to which the beam switching time is applied). That is, the BS may impose a restriction such that no DM-RS is transmitted in the corresponding symbol.

- Option 6: When the beam switching time is applied to the last symbol of PUSCH #1 or the first symbol of PUSCH #2, the BS may expect that the UE will first receive PUSCH #2 following in the time domain and apply the beam switching time to PUSCH #1. The reason for this is that systematic bits are expected to be located at front symbols of a PUSCH due to the characteristics of LDPC coding and frequency-first mapping, and reception of the systematic bits greatly affects successful reception of a codeblock. Alternatively, if one of the two transmitted PUSCHs is initial transmission (i.e., when an NDI among DCI fields is toggled) and the other is retransmission (i.e., when the NDI among the DCI field is not toggled), the BS may expect that the UE will apply the beam switching time to the retransmitted PUSCH.

**[Method #2A-3] The beam switching time is divided and applied to two consecutive UL signals/channels.**

When the UE transmits UL signal/channel #1 and UL signal/channel #2 (for example, consecutive in the time domain) with no symbol gap, and when the beam switching time of the UE is required between the two signals/channels, the BS may expect that the UE will transmit the two LTL signals/channels by dividing the beam switching time to the two consecutive LTL signals/channels. Alternatively, the BS may receive the two LTL signals/channels by dividing the beam switching time to the two consecutive UL signals/channels. In this case, a time duration (e.g., symbols, samples within a symbol, etc.) to which the beam switching time is applied may be rate-matched or punctured at the symbol level. Alternatively, the time duration may be excluded from the reception at the sample level (e.g., at the sub-symbol level).

Specifically, when two UL signals/channels have similar priorities, the BS may expect that the UE will apply the beam switching time to UL signal/channel #1 for a time corresponding to {beam switching time/alpha} and apply the beam switching time to LTL signal/channel #2 for a time corresponding to {1-(beam switching time/alpha)}. For example, the value of alpha may be 2, but the present disclosure is not limited thereto. For example, when both LTL signal/channel #1 and LTL signal/channel #2 are PUCCHs (or when both LTL signal/channel #1 and UL signal/channel #2 are either PUSCHs or SRSs), the above-described method may be applied. As another example, when both UL signal/channel #1 and UL signal/channel #2 are PUCCHs, and when both UL signal/channel #1 and UL signal/channel #2 are CG PUSCHs (or when both UL signal/channel #1 and UL signal/channel #2 are PUSCHs indicated by UL grants), the above-described method may be applied. As a further example, when both UL signal/channel #1 and UL signal/channel #2 are SRSs, and when both UL signal/channel #1 and UL signal/channel #2 are periodic (or semi-persistent) SRSs (or when both LTL signal/channel #1 and LTL signal/channel #2 are aperiodic SRSs), the above-described method may be applied.

In this case, the BS may be constrained to indicate no DM-RS in the last symbol of UL signal/channel #1 and/or the first symbol of UL signal/channel #2. That is, the BS may impose a restriction such that no DM-RS is transmitted in the last symbol of LTL signal/channel #1 and/or the first symbol of UL signal/channel #2.

**[Method #2A-4] How the beam switching time is applied is reported to the BS.**

When the UE transmits UL signal/channel #1 and UL signal/channel #2 (for example, consecutive in the time domain) with no symbol gap, and when the beam switching time of the UE is required between the two signals/channels, the BS may receive from the UE a report on whether the UE divides and applies the beam switching time to the two consecutive UL signals/channels or applies the beam switching time only to a specific UL signal/channel.

When the beam switching time is applied to a LTL signal/channel preceding or following in the time domain, the complexity of the LTE implementation may be reduced. For example, the UE may report to the BS that the UE prefers to apply the beam switching time only to the UL signal/channel following in the time domain. After reporting to the BS, the UE may apply the beam switching time to the first symbol of UL signal/channel #2. The BS may recognize that the UE prefers to apply the beam switching time only to the DL signal/channel following in the time domain, based on information reported by the UE. Accordingly, the BS may expect that the LTE will apply the beam switching time to the first symbol of DL signal/channel #2.

The proposed methods related to UL transmission may be applied differently depending on which waveform is configured for the UL transmission. A UL signal/channel in which DFT-s-OFDM is configured may be recovered even if the UL signal/channel is punctured in the time domain for a predetermined period of time. On the other hand, for a LTL signal/channel configured with a CP-OFDM waveform, if the UL signal/channel is punctured in the time domain for a predetermined period of time or more, all subcarriers may be affected, and as a result, it may be difficult to recover the corresponding UL signal/channel. Accordingly, for example, [Method #2A-2/3/4] described above may be applied to the UL signal/channel in which DFT-s-OFDM is configured, and [Method #2A-1] described above may be applied to the UL signal/channel in which OFDM is configured.

Considering that when the beam switching time is applied to DL signal/channel #2 or UL signal/channel #2 in the proposed methods, it may affect a time region longer than the CP length, it may be defined/configured in advance that the first symbol is configured by extending the CP of the second symbol of DL signal/channel #2 or UL signal/channel #2.

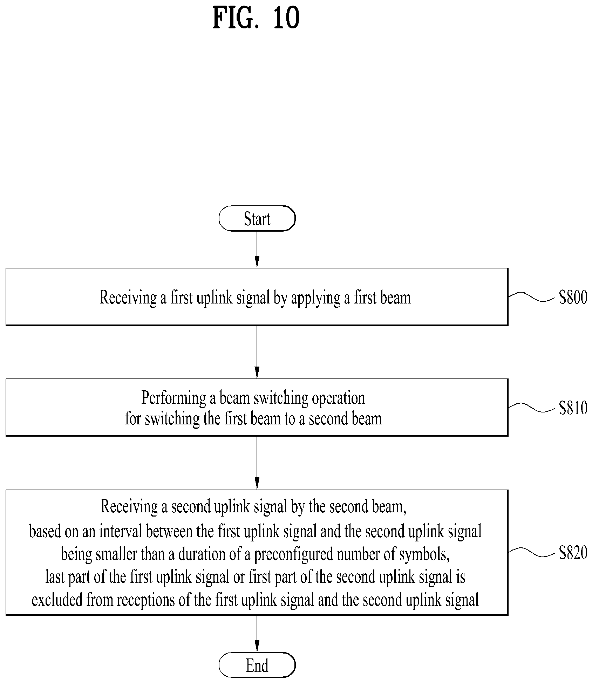

FIG. 10 is a flowchart illustrating operations of a BS according to the proposed embodiments.

Referring to FIG. 10, the BS may receive a first UL signal by applying a first beam (S1000). In addition, the UE may perform a beam switching operation for switching the first beam to a second beam (S1010) and receive a second UL signal by applying the second beam (S1020). For example, the first UL signal and the second UL signal may include at least one of a PRACH, a PUSCH, a PUCCH, or an SRS. In this case, the beam switching operation may be required between the first UL signal and the second UL signal as described above in [Method #2A-1] to [Method #2A-4]. Accordingly, a beam switching time required for performing the beam switching operation may be required between the first UL signal and the second LTL signal. The first LTL signal and the second LTL signal may correspond to LTL signal/channel #1 and LTL signal/channel #2 in [Method #2A-1] to [Method #2A-4], respectively.

Based on the interval between the first UL signal and the second UL signal being smaller than a duration of a predetermined number of symbols, last several symbols of the first LTL signal or first several symbols of the second LTL signal may be excluded from receiving the first UL signal and the second UL signal. For example, based on the interval between the first UL signal and the second UL signal being smaller than a predetermined gap consisting of n symbols (e.g., n=1), the last several symbols of the first UL signal or the first several symbols of the second UL signal may be excluded from receiving the first UL signal and the second UL signal. Alternatively, based on the interval between the first UL signal and the second LTL signal being smaller than the duration of the predetermined number of symbols, the BS may expect that the LTE will exclude the last several symbols of 1 LTL signal or the first several symbols of the second UL signal from transmission of the first UL signal and the second LTL signal.

The interval between the first UL signal and the second UL signal being smaller than the duration of the predetermined number of symbols may include the following cases: when the beam switching time is greater than the CP length of the first or second UL signal (or the duration of the predetermined number of symbols); when the beam switching time reported by signaling of LTE capability is greater than the CP length of the first or second LTL signal (or the duration of the predetermined number of symbols); or when the beam switching time is smaller than the CP length (or the duration of the predetermined number of symbols) and the difference between the beam switching time and the CP length (or the duration of the predetermined number of symbols) is smaller than or equal to a threshold. When the interval between the first UL signal and the second UL signal is not sufficient to perform the beam switching operation, the last several symbols of the first UL signal or the first several symbols of the second UL signal may be excluded from receiving the first UL signal and the second LTL signal in order to secure the beam switching time. In this case, the last m symbols of the first LTL signal or the first m symbols of the second LTL signal may be excluded from receiving the first UL signal and the second UL signal, where m may be smaller than or equal to n.

Excluding the last several symbols of the first UL signal (or the first several symbols of the second LTL signal) from the reception of the first LTL signal (or the second LTL signal) may mean that no modulation symbols are mapped to the last several symbols of the first UL signal (or the first several symbols of the second UL signal) by performing rate matching. Alternatively, excluding the last several symbols of the first UL signal (or the first several symbols of the second LTL signal) from the reception of the first UL signal (or the second LTL signal) may mean that the BS may receive the first UL channel (or the second UL channel) for all symbol durations allocated for the first UL channel (or the second UL channel) but exclude the last several symbols of the first UL channel (or the first several symbols of the second LTL channel) from decoding.

A time duration corresponding to the last several symbols of the first UL signal or the first several symbols of the second UL signal may be used as the beam switching time. The use of the beam switching time may mean that the beam switching time is applied as described above in [Method #2A-1] to [Method #2A-4].

Whether the time duration corresponding to the last several symbols of the first UL signal or the time duration corresponding to the first several symbols of the second LTL signal is used as the beam switching time may be determined according to the priorities of the first UL signal and the second UL signal. For example, the priorities of the first UL signal and the second LTL signal may be determined according to at least one of Options 1 to 7 of [Method #2A-2] described above. When the priority of the first UL signal is higher than that of the second LTL signal, the time duration corresponding to the first several symbols of the second UL signal may be used as the beam switching time. Alternatively, when the priority of the second LTL signal is higher than that of the first LTL signal, the time duration corresponding to the last several symbols of the first UL signal may be used as the beam switching time. That is, the LTE may apply the beam switching time to several symbols of a LTL signal having a lower priority among the two UL signals. In addition, the BS may expect the UE applies the beam switching time to the several symbols of the LTL signal with the lower priority. Accordingly, even when the interval between the first LTL signal and the second LTL signal is not sufficient to perform the beam switching operation, the beam switching time may be effectively secured, thereby preventing degradation of signal transmission/reception performance.

### 3) Receiver & Transmitter (Between Receiver and Transmitter)

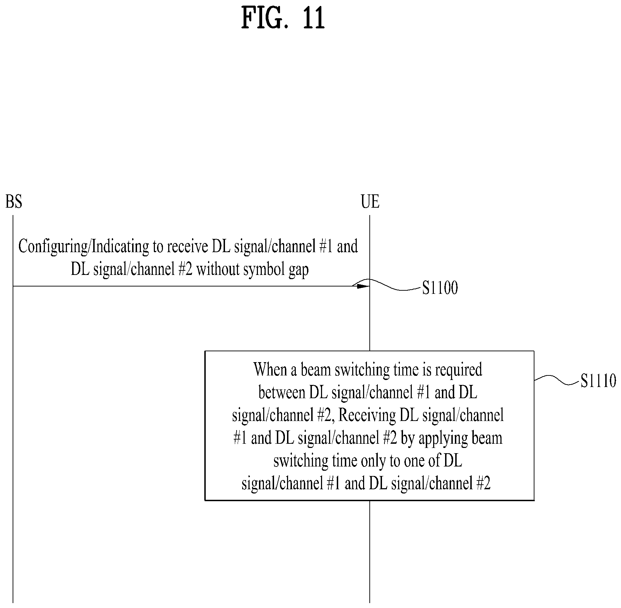

According to the proposed embodiments, the BS may instruct or configure the UE to receive DL signal/channel #1 and DL signal/channel #2 with no symbol gap as shown in FIG. 11. In this case, the BS and LTE may operate in an HF-NR system (e.g., frequency bands from 52.6 GHz to 71 GHz, which are referred to as FR3 for convenience). When a beam switching time is required between two DL signals/channels (consecutive in the time domain), the UE may receive the DL signals/channels by applying the beam switching time only to the specific DL signal/channel according to [Method #1-2]. Alternatively, the UE may receive the DL signals/channels by dividing and applying the beam switching time to the two consecutive DL signals/channels according to [Method #1-3]. In addition, when a beam switching time is required between two DL signals/channels consecutive in the time domain, the two DL signals/channels may be transmitted/received according to [Method #1-1] or [Method #1-4].

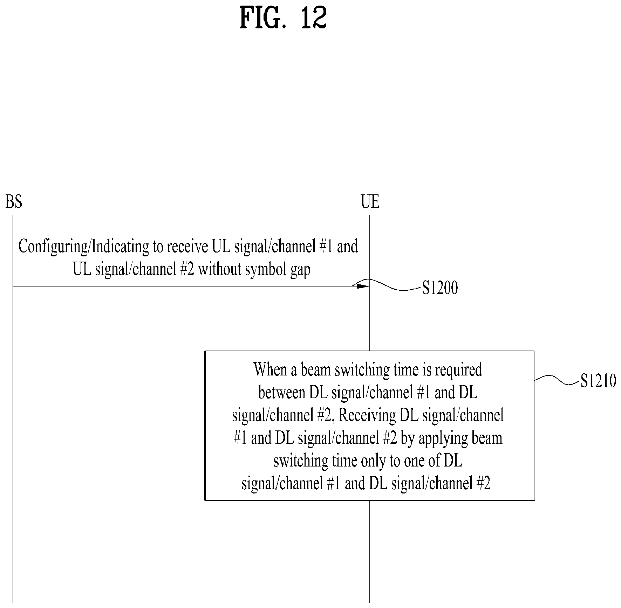

According to the proposed embodiments, the BS may instruct or configure the UE to transmit LTL signal/channel #1 and LTL signal/channel #2 with no symbol gap as shown in FIG. 12. In this case, the BS and UE may operate in an HF-NR system (e.g., frequency bands from 52.6 GHz to 71 GHz, which are referred to as FR3 for convenience). When a beam switching time is required between two signals/channels (consecutive in the time domain), the LTE may transmit the UL signals/channels by applying the beam switching time only to a specific UL signal/channel according to [Method #2-2]. Alternatively, the UE may transmit the UL signals/channels by dividing the beam switching time to the two consecutive UL signals/channels according to [Method #2-3]. In addition, when a beam switching time is required between two LTL signals/channels consecutive in the time domain, the two LTL signals/channels may be transmitted/received according to [Method #2-1] or [Method #2-4].

The various descriptions, functions, procedures, proposals, methods, and/or operational flowcharts proposals of the present disclosure described above in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

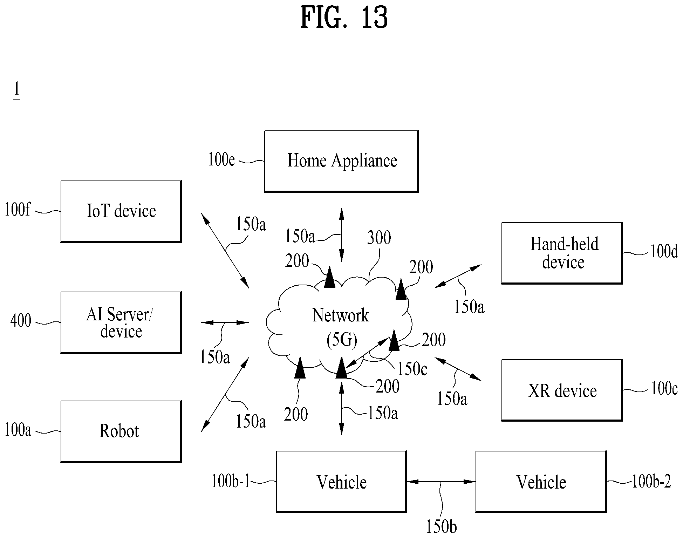

FIG. 13 illustrates a communication system 1 applied to the present disclosure.

Referring to FIG. 13, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

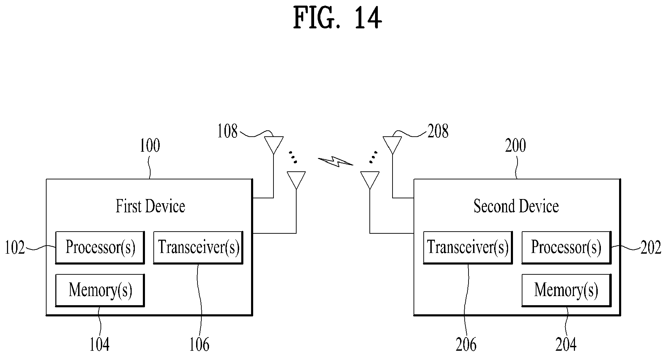

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

In the present disclosure, at least one memory (e.g., 104 or 204) may store instructions or programs which, when executed, cause at least one processor operably coupled to the at least one memory to perform operations according to some embodiments or implementations of the present disclosure.

In the present disclosure, a computer-readable storage medium may store at least one instruction or computer program which, when executed by at least one processor, causes the at least one processor to perform operations according to some embodiments or implementations of the present disclosure.

In the present disclosure, a processing device or apparatus may include at least one processor and at least one computer memory coupled to the at least one processor. The at least one computer memory may store instructions or programs which, when executed, cause the at least one processor operably coupled to the at least one memory to perform operations according to some embodiments or implementations of the present disclosure.

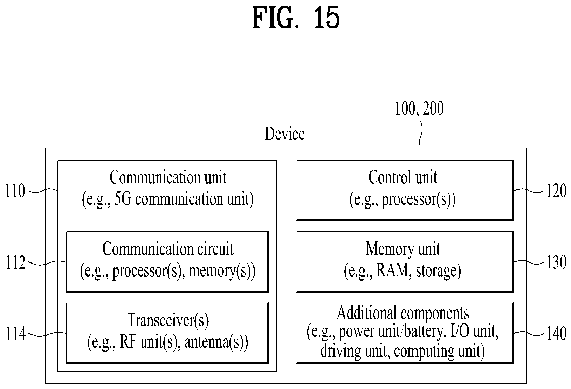

FIG. 15 illustrates another example of a wireless device applied to the present disclosure. The wireless device may be implemented in various forms according to a usecase/service (refer to FIG. 23).

Referring to FIG. 15, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the handheld device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Wireless communication technologies implemented in the wireless devices 100 and 200 of the present disclosure may include narrowband Internet of Things (NB-IoT) for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technologies implemented in the wireless devices 100 and 200 of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technologies implemented in the wireless devices 100 and 200 of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called various names.

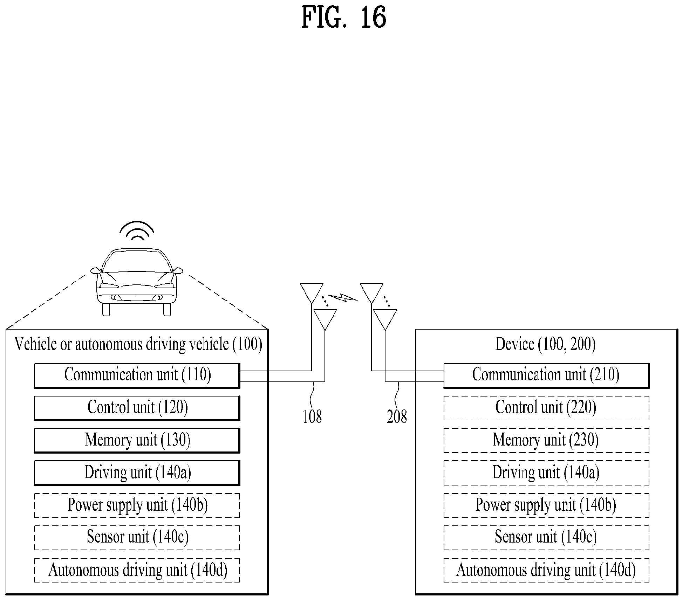

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The present disclosure may be used for a UE, a BS, or other equipment in a wireless mobile communication system.

**Claims**

1. A method of transmitting an uplink signal by a user equipment (UE) in a wireless communication system, the method comprising:

   transmitting a first uplink signal by applying a first beam;
   performing a beam switching operation for switching the first beam to a second beam; and
   transmitting a second uplink signal by applying the second beam,
   wherein based on an interval between the first uplink signal and the second uplink signal being smaller than a duration of a predetermined number of symbols, last several symbols of the first uplink signal or first several symbols of the second uplink signal are excluded from transmission of the first uplink signal and the second uplink signal.

2. The method of claim 1,
   wherein the last several symbols of the first uplink signal or the first several symbols of the second uplink signal are rate-matched or punctured.

3. The method of claim 1,
   wherein a time duration corresponding to the last several symbols of the first uplink signal or a time duration corresponding to the first several symbols of the second uplink signal is used as a beam switching time for the beam switching operation.

4. The method of claim 3,

   wherein based on a priority of the first uplink signal being higher than a priority of the second uplink signal, the time duration corresponding to the first several symbols of the second uplink signal is used as the beam switching time, and
   wherein based on the priority of the second uplink signal being higher than the priority of the first uplink signal, the time duration corresponding to the last several symbols of the first uplink signal is used as the beam switching time.

5. The method of claim 4,
   wherein based on that the priorities of the first and second uplink signals are determined based on types of the first and second uplink signals, and that the types of the first and second uplink signals are same, a priority of a signal scheduled by downlink control information (DCI) is determined to be higher than a priority of a signal configured by higher layer signaling.

6. The method of claim 5,

   wherein the types of the first and second uplink signals comprise at least one of a physical random access channel (PRACH), a physical uplink shared channel (PUSCH), a physical uplink control channel (PUCCH), or a sounding reference signal (SRS), and
   wherein priorities are determined in the following order: the PRACH, the PUCCH, the PUSCH, and the SRS.

7. The method of claim 1,

   wherein 1) a beam switching time for the beam switching operation is longer than a cyclic prefix (CP) length of the first and second uplink signals or the duration of the predetermined number of symbols;
   wherein 2) a beam switching time reported by signaling of capability of the UE is longer than the CP length of the first and second uplink signals or the duration of the predetermined number of symbols; or
   wherein 3) the beam switching time is shorter than the CP length or the duration of the predetermined number of symbols, and a difference between the beam switching time and the CP length or the duration of the predetermined number of symbols is smaller than or equal to a threshold.

8. A user equipment (LTE) configured to operate in a wireless communication system, the UE comprising:

   at least one radio frequency (RF) unit;
   at least one processor; and
   at least one computer memory operably coupled to the at least one processor and configured to, when executed, cause the at least one processor to perform operations comprising:

   transmitting a first uplink signal by applying a first beam;
   performing a beam switching operation for switching the first beam to a second beam; and
   transmitting a second uplink signal by applying the second beam,
   wherein based on an interval between the first uplink signal and the second uplink signal being smaller than a duration of a predetermined number of symbols, last several symbols of the first uplink signal or first several symbols of the second uplink signal are excluded from transmission of the first uplink signal and the second uplink signal.

9. The LTE of claim 8,
   wherein the last several symbols of the first uplink signal or the first several symbols of the second uplink signal are rate-matched or punctured.

10. The UE of claim 8, wherein a time duration corresponding to the last several symbols of the first uplink signal or a time duration corresponding to the first several symbols of the second uplink signal is used as a beam switching time for the beam switching operation.

11. The LTE of claim 10,

    wherein based on a priority of the first uplink signal being higher than a priority of the second uplink signal, the time duration corresponding to the first several symbols of the second uplink signal is used as the beam switching time, and
    wherein based on the priority of the second uplink signal being higher than the priority of the first uplink signal, the time duration corresponding to the last several symbols of the first uplink signal is used as the beam switching time.

12. The LTE of claim 11,
    wherein based on that the priorities of the first and second uplink signals are determined based on types of the first and second uplink signals, and that the types of the first and second uplink signals are same, a priority of a signal scheduled by downlink control information (DCI) is determined to be higher than a priority of a signal configured by higher layer signaling.

13. The LTE of claim 12,

wherein the types of the first and second uplink signals comprise at least one of a physical random access channel (PRACH), a physical uplink shared channel (PUSCH), a physical uplink control channel (PUCCH), or a sounding reference signal (SRS), and
wherein priorities are determined in the following order: the PRACH, the PUCCH, the PUSCH, and the SRS.

14. The LTE of claim 8,

wherein 1) a beam switching time for the beam switching operation is longer than a cyclic prefix (CP) length of the first and second uplink signals or the duration of the predetermined number of symbols;
wherein 2) a beam switching time reported by signaling of capability of the UE is longer than the CP length of the first and second uplink signals or the duration of the predetermined number of symbols; or
wherein 3) the beam switching time is shorter than the CP length or the duration of the predetermined number of symbols, and a difference between the beam switching time and the CP length or the duration of the predetermined number of symbols is smaller than or equal to a threshold.

15. An apparatus for a user equipment (LTE), the apparatus comprising:

at least one processor; and
at least one computer memory operably coupled to the at least one processor and configured to, when executed, cause the at least one processor to perform operations comprising:

transmitting a first uplink signal by applying a first beam;
performing a beam switching operation for switching the first beam to a second beam; and
transmitting a second uplink signal by applying the second beam,
wherein based on an interval between the first uplink signal and the second uplink signal being smaller than a duration of a predetermined number of symbols, last several symbols of the first uplink signal or first several symbols of the second uplink signal are excluded from transmission of the first uplink signal and the second uplink signal.

16. The apparatus of claim 15,
wherein the last several symbols of the first uplink signal or the first several symbols of the second uplink signal are rate-matched or punctured.

17. The apparatus of claim 15,
wherein a time duration corresponding to the last several symbols of the first uplink signal or a time duration corresponding to the first several symbols of the second uplink signal is used as a beam switching time for the beam switching operation.

18. The apparatus of claim 17,

wherein based on a priority of the first uplink signal being higher than a priority of the second uplink signal, the time duration corresponding to the first part of the second uplink signal is used as the beam switching time, and
wherein based on the priority of the second uplink signal being higher than the priority of the first uplink signal, the time duration corresponding to the last part of the first uplink signal is used as the beam switching time.

19. The apparatus of claim 18,
wherein based on that the priorities of the first and second uplink signals are determined based on types of the first and second uplink signals, and that the types of the first and second uplink signals are same, a priority of a signal scheduled by downlink control information (DCI) is determined to be higher than a priority of a signal configured by higher layer signaling.

20. The apparatus of claim 19,

wherein the types of the first and second uplink signals comprise at least one of a physical random access channel (PRACH), a physical uplink shared channel (PUSCH), a physical uplink control channel (PUCCH), or a sounding reference signal (SRS), and

wherein priorities are determined in the following order: the PRACH, the PUCCH, the PUSCH, and the SRS.

21. The apparatus of claim 15,

wherein 1) a beam switching time for the beam switching operation is longer than a cyclic prefix (CP) length of the first and second uplink signals or the duration of the predetermined number of symbols; wherein 2) a beam switching time reported by signaling of capability of the UE is longer than the CP length of the first and second uplink signals or the duration of the predetermined number of symbols; or wherein 3) the beam switching time is shorter than the CP length or the duration of the predetermined number of symbols, and a difference between the beam switching time and the CP length or the duration of the predetermined number of symbols is smaller than or equal to a threshold.

22. A computer-readable storage medium comprising at least one computer program configured to, when executed, cause at least one processor to perform operations comprising:

transmitting a first uplink signal by applying a first beam; performing a beam switching operation for switching the first beam to a second beam; and transmitting a second uplink signal by applying the second beam, wherein based on an interval between the first uplink signal and the second uplink signal being smaller than a duration of a predetermined number of symbols, last several symbols of the first uplink signal or first several symbols of the second uplink signal are excluded from transmission of the first uplink signal and the second uplink signal.

23. The computer-readable storage medium of claim 22, wherein the last several symbols of the first uplink signal or the first several symbols of the second uplink signal are rate-matched or punctured.

24. The computer-readable storage medium of claim 22, wherein a time duration corresponding to the last several symbols of the first uplink signal or a time duration corresponding to the first several symbols of the second uplink signal is used as a beam switching time for the beam switching operation.

25. The computer-readable storage medium of claim 22,

wherein based on a priority of the first uplink signal being higher than a priority of the second uplink signal, the time duration corresponding to the first several symbols of the second uplink signal is used as the beam switching time, and wherein based on the priority of the second uplink signal being higher than the priority of the first uplink signal, the time duration corresponding to the last several symbols of the first uplink signal is used as the beam switching time.

26. The computer-readable storage medium of claim 25, wherein based on that the priorities of the first and second uplink signals are determined based on types of the first and second uplink signals, and that the types of the first and second uplink signals are same, a priority of a signal scheduled by downlink control information (DCI) is determined to be higher than a priority of a signal configured by higher layer signaling.

27. The computer-readable storage medium of claim 26,

wherein the types of the first and second uplink signals comprise at least one of a physical random access channel (PRACH), a physical uplink shared channel (PUSCH), a physical uplink control channel (PUCCH), or a sounding reference signal (SRS), and wherein priorities are determined in the following order: the PRACH, the PUCCH, the PUSCH, and the SRS.

28. The computer-readable storage medium of claim 22,

wherein 1) a beam switching time for the beam switching operation is longer than a cyclic prefix (CP) length of the first and second uplink signals or the duration of the predetermined number of symbols;

wherein 2) a beam switching time reported by signaling of capability of the UE is longer than the CP length of the first and second uplink signals or the duration of the predetermined number of symbols; or

wherein 3) the beam switching time is shorter than the CP length or the duration of the predetermined number of symbols, and a difference between the beam switching time and the CP length or the duration of the predetermined number of symbols is smaller than or equal to a threshold.

29. A method of receiving an uplink signal by a base station in a wireless communication system, the method comprising:

receiving a first uplink signal by applying a first beam;
performing a beam switching operation for switching the first beam to a second beam; and
receiving a second uplink signal by applying the second beam,
wherein based on an interval between the first uplink signal and the second uplink signal being smaller than a duration of a predetermined number of symbols, last several symbols of the first uplink signal or first several symbols of the second uplink signal are excluded from reception of the first uplink signal and the second uplink signal.

30. A base station configured to operate in a wireless communication system, the base station comprising:

at least one radio frequency (RF) unit;
at least one processor; and
at least one computer memory operably coupled to the at least one processor and configured to, when executed, cause the at least one processor to perform operations comprising:

receiving a first uplink signal by applying a first beam;
performing a beam switching operation for switching the first beam to a second beam; and
receiving a second uplink signal by applying the second beam,
wherein based on an interval between the first uplink signal and the second uplink signal being smaller than a duration of a predetermined number of symbols, last several symbols of the first uplink signal or first several symbols of the second uplink signal are excluded from reception of the first uplink signal and the second uplink signal.

# FIG. 1

Initial Cell Search — PSS/SSS & [DLRS] & PBCH — S11

System Information Reception — PDCCH/PDSCH (BCCH) — S12

Random Access Procedure — PRACH (S13), PDCCH/PDSCH (S14), PUSCH (S15), PDCCH/PDSCH (S16)

General DL/UL Tx/Rx — S18 — PDCCH/PDSCH, PUSCH/PUCCH — S17
- DL/UL ACK/NACK
- UE CQI/PMI/Rank Report using PUSCH and PUCCH

EP 4 152 669 A1

# FIG. 2

...... | One Frame (10ms) | ......

...... | Half-Frame (5ms) | Half-Frame (5ms) | ......

...... | Subframe 0 (1ms) | ...... | Subframe 4 (1ms) | Subframe 5 (1ms) | ...... | Subframe 9 (1ms) | ......

Subframe (1ms)

15KHz | Slot (14 symbols)

1ms

30KHz | Slot 0 (14 symbols) | Slot 1

500us

60KHz | Slot 0 (14 symbols) | Slot 1 | Slot 2 | Slot 3

250us

120KHz | Slot 0 (14 symbols) | Slot 1 | Slot 2 | Slot 3 | Slot 4 | Slot 5 | Slot 6 | Slot 7

125us

# FIG. 3

# FIG. 4

# FIG. 5

REG

t

1 symbol

| D | R | D | D | D | R | D | D | D | R | D | D | D | D |

f

1 resource block

# FIG. 6

(a)                    (b)

# FIG. 7

UE                                                                              BS

SRS Configuration IE
(usage = BM, SRS-SpatialRelation Info)
                                                                          ⌐─S700

S710── | Determining Tx beam
         about SRS resource |

Transmitting SRS through determined Tx beam
                                                                          ⌐─S720

feedback
                                                                          ⌐─S730

# FIG. 8

Symbol index | N | N+1 | N+2 | N+3 | N+4 | N+5 | N+6 |

CP

←————————— CORESET —————————→←→←————————— CSI-RS —————————→

Duration to which beam switching time is applied

# FIG. 9

```
                    ┌──────────┐
                    │  Start   │
                    └──────────┘
                         │
                         ▼
┌──────────────────────────────────────────────────────────┐
│                                                           │ ──── S900
│   Transmitting a first uplink signal by applying a first beam │
└──────────────────────────────────────────────────────────┘
                         │
                         ▼
┌──────────────────────────────────────────────────────────┐
│           Performing a beam switching operation           │ ──── S910
│      for switching the first beam to a second beam        │
└──────────────────────────────────────────────────────────┘
                         │
                         ▼
┌──────────────────────────────────────────────────────────┐
│     Transmitting a second uplink signal by the second beam,     │
│ based on an interval between the first uplink signal and the second uplink signal │ ──── S920
│     being smaller than a duration of a preconfigured number of symbols,     │
│   last part of the first uplink signal or first part of the second uplink signal is   │
│ excluded from transmissions of the first uplink signal and the second uplink signal │
└──────────────────────────────────────────────────────────┘
                         │
                         ▼
                    ┌──────────┐
                    │   End    │
                    └──────────┘
```

# FIG. 10

```
                    ┌─────────────┐
                    │    Start    │
                    └─────────────┘
                           │
                           ▼
┌───────────────────────────────────────────────────────────┐
│                                                             │
│      Receiving a first uplink signal by applying a first beam │──── S800
│                                                             │
└───────────────────────────────────────────────────────────┘
                           │
                           ▼
┌───────────────────────────────────────────────────────────┐
│              Performing a beam switching operation          │
│         for switching the first beam to a second beam       │──── S810
│                                                             │
└───────────────────────────────────────────────────────────┘
                           │
                           ▼
┌───────────────────────────────────────────────────────────┐
│          Receiving a second uplink signal by the second beam, │
│  based on an interval between the first uplink signal and the second uplink signal │
│      being smaller than a duration of a preconfigured number of symbols, │──── S820
│    last part of the first uplink signal or first part of the second uplink signal is │
│  excluded from receptions of the first uplink signal and the second uplink signal │
└───────────────────────────────────────────────────────────┘
                           │
                           ▼
                    ┌─────────────┐
                    │     End     │
                    └─────────────┘
```

# FIG. 11

BS           UE

Configuring/Indicating to receive DL signal/channel #1 and
DL signal/channel #2 without symbol gap

~S1100

When a beam switching time is required
between DL signal/channel #1 and DL
signal/channel #2, Receiving DL signal/channel
#1 and DL signal/channel #2 by applying beam
switching time only to one of DL
signal/channel #1 and DL signal/channel #2

~S1110

# FIG. 12

BS                                                                    UE

Configuring/Indicating to receive UL signal/channel #1 and
UL signal/channel #2 without symbol gap
                                                                    ⌐S1200

When a beam switching time is required
between DL signal/channel #1 and DL
signal/channel #2, Receiving DL signal/channel          ⌐S1210
#1 and DL signal/channel #2 by applying beam
switching time only to one of DL
signal/channel #1 and DL signal/channel #2

# FIG. 13

<u>1</u>

# FIG. 14

# FIG. 15

100, 200

Device

Communication unit
(e.g., 5G communication unit) — 110

Control unit
(e.g., processor(s)) — 120

Communication circuit
(e.g., processor(s), memory(s)) — 112

Memory unit
(e.g., RAM, storage) — 130

Transceiver(s)
(e.g., RF unit(s), antenna(s)) — 114

Additional components
(e.g., power unit/battery, I/O unit,
driving unit, computing unit) — 140

# FIG. 16

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108        208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
| --- |
| **PCT/KR2021/006003** |

**A. CLASSIFICATION OF SUBJECT MATTER**

**H04L 5/00**(2006.01)i; **H04L 1/00**(2006.01)i; **H04L 1/18**(2006.01)i; **H04L 27/26**(2006.01)i; **H04B 7/0408**(2017.01)i; **H04W 72/12**(2009.01)i

According to International Patent Classification (IPC) or to both national classification and IPC

**B. FIELDS SEARCHED**

Minimum documentation searched (classification system followed by classification symbols)

H04L 5/00(2006.01); H04B 7/06(2006.01); H04W 16/28(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 스위칭(beam switching), 상향링크(uplink), 심볼 구간(symbol duration), 전송(transmission), 제외(exclusion), 우선 순위(priority)

**C. DOCUMENTS CONSIDERED TO BE RELEVANT**

| Category* | Citation of document, with indication, where appropriate, of the relevant passages | Relevant to claim No. |
| --- | --- | --- |
| Y | NOKIA et al. Enhancements on Multi-beam Operation. R1-1811408, 3GPP TSG RAN WG1 Meeting #94-bis. Chengdu, People's Republic of China. 29 September 2018. See pages 1-5; and figure 1. | 1,2,8,9,15,16, 22,23,29,30 |
| A | | 3-7,10-14,17-21,24-28 |
| Y | ZTE. Remaining issues on UL control enhancements for NR URLLC. R1-2001612, 3GPP TSG RAN WG1 #100bis. e-Meeting. 11 April 2020. See page 8; and figure 5. | 1,2,8,9,15,16, 22,23,29,30 |
| A | APPLE INC. Remaining Issues on UCI Enhancements for eURLLC. R1-2002330, 3GPP TSG RAN WG1 #100bis. e-Meeting. 11 April 2020. See pages 2-3; and figure 2. | 1-30 |
| A | US 2019-0313389 A1 (QUALCOMM INC.) 10 October 2019 (2019-10-10) See paragraphs [0005]-[0033] and [0089]-[0117]; and figures 2-4. | 1-30 |

| ✓ Further documents are listed in the continuation of Box C. | | ✓ See patent family annex. |
| --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 September 2021** | **10 September 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/006003**

| C. | DOCUMENTS CONSIDERED TO BE RELEVANT | |
|---|---|---|
| Category* | Citation of document, with indication, where appropriate, of the relevant passages | Relevant to claim No. |
| A | US 2019-0082330 A1 (MEDIATEK INC.) 14 March 2019 (2019-03-14)<br>See paragraphs [0026]-[0031]; and figures 1-3. | 1-30 |

Form PCT/ISA/210 (second sheet) (July 2019)

**INTERNATIONAL SEARCH REPORT**
Information on patent family members

International application No.

**PCT/KR2021/006003**

| Patent document cited in search report | | | Publication date (day/month/year) | Patent family member(s) | | | Publication date (day/month/year) |
|---|---|---|---|---|---|---|---|
| US | 2019-0313389 | A1 | 10 October 2019 | CN | 112005513 | A | 27 November 2020 |
| | | | | EP | 3776962 | A1 | 17 February 2021 |
| | | | | WO | 2019-194923 | A1 | 10 October 2019 |
| US | 2019-0082330 | A1 | 14 March 2019 | CN | 111095888 | A | 01 May 2020 |
| | | | | US | 10873862 | B2 | 22 December 2020 |
| | | | | WO | 2019-052459 | A1 | 21 March 2019 |

Form PCT/ISA/210 (patent family annex) (July 2019)